# EUROPEAN PATENT APPLICATION

(11) **EP 1 178 403 A2**
(43) Date of publication of application: **06.02.2002**
(21) Application number: 01306589.1
(22) Date of filing: 01.08.2001
(51) Int. Cl.: G06F 9/445

(54) **Download system**

(30) Priority: 01.08.2000 JP 2000233461; 19.09.2000 JP 2000282761
(71) Applicant: MATSUSHITA ELECTRIC INDUSTRIAL CO., LTD., Kadoma-shi, Osaka 571-8501 (JP)
(72) Inventor: Uchida, Kazuyuki, Osaka-shi, Osaka-fu 536-0005 (JP); Yasutake, Koichi, Nagaokakyo-shi, Kyoto-fu 617-0833 (JP)
(74) Representative: Crawford, Andrew Birkby

(57) **Abstract**

A download-system 1 in which a transmitting apparatus downloads a program to a receiving apparatus. The receiving apparatus 20 as a requester transmits a program download request to the transmitting apparatus 10, together with receiving apparatus information that indicates the use state of the resources in the receiving apparatus 20. The transmitting apparatus 10 judges whether the requested program can be executed by the receiving apparatus 20, based on the received receiving apparatus information and resource usage information 700 which indicates resources required for each program execution, and is held by the transmitting apparatus 10. The transmitting apparatus 10 downloads the requested program to the receiving apparatus 20 only when it judges positively.

## Description

### BACKGROUND OF THE INVENTION

### (1) Field of the Invention

The present invention relates to a download system in which a transmitting apparatus downloads a program to a receiving apparatus using a radio or wired communication.

### (2) Description of the Related Art

Some services provided in recent years use a download system in which in response to a request from a receiving apparatus, a transmitting apparatus downloads a program to the receiving apparatus using radio or wired communications. In one example of such downloading services, a program, which is used to order an item on an online shopping or to preselect a broadcast program from a list of scheduled broadcast programs, is downloaded from a server to a terminal (e.g., a set top box) at a user. In another service, a self-diagnostic program is downloaded from a monitoring center to a monitor-target apparatus in a remote monitoring system.

In such conventional download systems, the transmitting apparatus holds static information concerning the receiving apparatus beforehand (e.g., memory capacity or specifications of the receiving apparatus). The transmitting apparatus transmits a program to be downloaded to the receiving apparatus after checking on the static information and confirming that there is no problem for storing or executing the program.

However, the environment for a program to be processed in the receiving apparatus changes dynamically, the environment including, for example, (a) an amount of free space that can be allocated to store the program and (b) presence of OS resources available for executing the program. For example, when a program download request is issued while another program is being executed in the receiving apparatus, the storage area storing the other program and the resources used by the other program cannot be allocated to the newly requested program. Furthermore, users instruct to download a program without recognizing the use state of the storage area and OS resources. As a result, there is always a possibility that even if a receiving apparatus issues a program download request and receives the program in response to it, the receiving apparatus cannot store nor execute the program. In such cases, even if a download process starts, the receiving apparatus may cancel the download process due to lack of enough free space to store the program, or even if having succeeded in storing a downloaded program, the receiving apparatus may not be able to execute the program due to lack of resources necessary for the execution, or the execution may lead to a runaway of the system. These kinds of downloading are not desirable from a viewpoint of providing proper services to the users, and have a problem of using wasteful time and extra communication cost.

### SUMMARY OF THE INVENTION

It is therefore the object of the present invention to provide a download system that does not perform a wasteful download process when the receiving apparatus cannot store or execute a download program.

The above object is fulfilled by a download system including (a) a receiving apparatus for receiving and executing a program and (b) a transmitting apparatus for transmitting the program to the receiving apparatus, the receiving apparatus comprising: information generating means for generating receiving apparatus information that indicates a use state of resources held by the receiving apparatus that are necessary for program executions; request transmitting means for transmitting to the transmitting apparatus a download request which contains (a) an identification of a download-target program and (b) the generated receiving apparatus information; and program receiving means for receiving a program that is sent from the transmitting apparatus in response to the download request, and the transmitting apparatus comprising: program holding means for holding one or more programs and identifications thereof; resource information holding means for holding one or more pieces of resource information which correspond to the one or more programs on a one-to-one basis and each indicate resources necessary for an execution of a corresponding program; request receiving means for receiving the download request from the receiving apparatus; judging means for judging, from (a) a piece of resource information corresponding to one of the one or more programs with the identification contained in the download request and (b) the receiving apparatus information contained in the download request, whether the receiving apparatus can execute the program with the identification; and program transmitting means for transmitting to the receiving apparatus the program with the identification when the judging means judges that the receiving apparatus can execute the program.

With the above construction, a wasteful download process is not performed since the receiving apparatus transmits to the transmitting apparatus a download request together with the receiving apparatus information concerning usable resources, and in response to this, the transmitting apparatus judges whether the receiving apparatus can execute the requested program by referring to the received receiving apparatus information, and downloads the program only when it judges positively.

The above object can also be fulfilled by a download system including (a) a receiving apparatus for receiving and executing a program and (b) a transmitting apparatus for transmitting the program to the receiving apparatus, the receiving apparatus comprising: information generating means for generating receiving apparatus information that indicates a use state of resources held by the receiving apparatus that are necessary for program executions; request transmitting means for transmitting to the transmitting apparatus a download request which contains (a) an identification of a download-target program and (b) the generated receiving apparatus information; and program receiving means for receiving a program that is sent from the transmitting apparatus in response to the download request, and the transmitting apparatus comprising: program holding means for holding a plurality of programs and identifications thereof, the plurality of programs achieving basically the same function and requiring resources that satisfy different conditions; resource information holding means for holding a plurality of pieces of resource information which correspond to the plurality of programs on a one-to-one basis and each indicate resources necessary for an execution of a corresponding program; request receiving means for receiving the download request from the receiving apparatus; judging means for judging, from (a) two or more pieces of resource information corresponding to two or more programs that have the identification contained in the download request, among the plurality of programs and (b) the receiving apparatus information contained in the download request, whether the receiving apparatus can execute the two or more programs; and program transmitting means for transmitting to the receiving apparatus a program that the judging means judges the receiving apparatus can execute.

With the above construction, there is a high possibility that any of the plurality of programs held by the transmitting apparatus can be executed in the receiving apparatus. This reduces the possibility of causing an event that the program cannot be downloaded to the receiving apparatus due to shortage of resources.

In the above download system, when judging that the receiving apparatus can execute any of at least two programs among the two or more programs, the judging means may select one out of the at least two programs, and the program transmitting means transmits the selected program to the receiving apparatus.

Also, in the above download system, when the judging means judges that the receiving apparatus can execute any of at least two programs among the two or more programs, the program transmitting means may transmit to the receiving apparatus at least two pieces of characteristic information that each indicate characteristics at an execution of a corresponding one of the at least two programs, receives a selection result which is sent from the receiving apparatus in response to the at least two pieces of characteristic information, and transmits a program corresponding to the selection result to the receiving apparatus, and the receiving apparatus further comprising: selection receiving means for presenting to a user the at least two pieces of characteristic information received from the program transmitting means, allowing the user to select one among the at least two pieces of characteristic information, and receiving a selection result from the user; and selection result notifying means for notifying the transmitting apparatus of the selection result.

With the above construction, when there are a plurality of download candidate programs for one request, a program can be selected in accordance with the user's intention, as well as achieving the formerly described effects.

The above object can also be fulfilled by a download system including (a) a receiving apparatus for receiving and executing a program and (b) a transmitting apparatus for transmitting the program to the receiving apparatus, the transmitting apparatus comprising: program holding means for holding one or more programs and identifications thereof; resource data holding means for holding one or more pieces of resource data which correspond to the one or more programs on a one-to-one basis and each define resources necessary for an execution of a corresponding program; request receiving means for receiving either a resource data request or a program request from the receiving apparatus; and transmitting means for either (a) reading from the resource data holding means a piece of resource data corresponding to an identification contained in the received resource data request and transmitting the read piece of resource data to the receiving apparatus, or (b) reading from the program holding means a program corresponding to an identification contained in the received program request, and transmitting the read program to the receiving apparatus, and the receiving apparatus comprising: first request transmitting means for transmitting to the transmitting apparatus the resource data request that contains the identification of a download-target program; resource data receiving means for receiving the piece of resource data sent from the transmitting apparatus in response to the resource data request; judgingmeans for judging from the piece of resource data whether the receiving apparatus can execute the download-target program; second request transmitting means for, when the judging means judges that the receiving apparatus can execute the download-target program, transmitting the program request containing the identification of the download-target program; and program receiving means for receiving a program that is sent from the transmitting apparatus in response to the program request.

The above construction prevents a wasteful download process from being performed and reduces the load on the transmitting apparatus since the receiving apparatus judges whether it can execute the program. As a result, even if the transmitting apparatus receives a plurality of download requests during a short period of time, the download requests can relatively be processed without delay.

In the above download system, the one or more pieces of resource data held by the resource data holding means may be resource acquisition scripts used for acquiring resources necessary for executions of corresponding programs, and the judging means judges from a result of a provisional execution of a resource acquisition script received from the transmitting apparatus whether the receiving apparatus can execute the download-target program.

With the above construction, the judgment on whether the program can be executed is made by executing a part of the resource acquisition process which is included in the program execution process. This simplifies the procedure of the judgment, as well as achieving the formerly described effects.

The above object is also fulfilled by a download system including (a) a receiving apparatus for receiving and executing a program and (b) a transmitting apparatus for transmitting the program to the receiving apparatus, the transmitting apparatus comprising: program holding means for holding one or more programs and identifications thereof; check script holding means for holding one or more check scripts which correspond to the one or more programs and are each used to check whether the receiving apparatus has either of a device function and an embedded-program function that is necessary for an execution of a corresponding program; request receiving means for receiving either a check script request or a program request from the receiving apparatus; and transmitting means for either (a) reading from the check script holding means a check script corresponding to an identification contained in the received check script request and transmitting the read check script to the receiving apparatus, or (b) reading from the program holding means a program corresponding to an identification contained in the received program request, and transmitting the read program to the receiving apparatus, and the receiving apparatus comprising: first request transmitting means for transmitting to the transmitting apparatus the check script request that contains the identification of a download-target program; check script receiving means for receiving the check script sent from the transmitting apparatus in response to the check script request; judging means for judging from a result of an execution of the received check script whether the receiving apparatus can execute the download-target program; second request transmitting means for, when the judging means judges that the receiving apparatus can execute the download-target program, transmitting the program request containing the identification of the download-target program; and program receiving means for receiving a program that is sent from the transmitting apparatus in response to the program request.

The above construction prevents a wasteful download of a program that cannot be executed due to lack of certain functions of devices or programs in the receiving apparatus. Also, since the judgment is made based on the results of the execution of the script, the receiving apparatus need not collect and send information concerning the device or program functions to the transmitting apparatus. This reduces the load on the judgment process.

The above effects described so far can also be achieved by one of the transmitting apparatus and the receiving apparatus constituting the download system.

For example, the effect of preventing a wasteful download process is achieved by a receiving apparatus for receiving and executing a program in a download system which also includes a transmitting apparatus for transmitting the program to the receiving apparatus, the receiving apparatus comprising: information generating means for generating receiving apparatus information that indicates a use state of resources held by the receiving apparatus that are necessary for program executions; request transmitting means for transmitting to the transmitting apparatus a download request which contains (a) an identification of a download-target program and (b) the generated receiving apparatus information; and program receiving means for receiving a program that is sent from the transmitting apparatus in response to the download request.

The effect of preventing a wasteful download process is also achieved by a transmitting apparatus that transmits a program to a receiving apparatus that receives and executes the program, the transmitting apparatus and the receiving apparatus being included in a download system, the transmitting apparatus comprising: program holding means for holding one or more programs and identifications thereof; resource information holding means for holding one or more pieces of resource information which correspond to the one or more programs on a one-to-one basis and each indicate resources necessary for an execution of a corresponding program; request receiving means for receiving a download request from the receiving apparatus; judging means for judging, from (a) a piece of resource information corresponding to one of the one or more programs with an identification contained in the download request and (b) receiving apparatus information contained in the download request, whether the receiving apparatus can execute the program with the identification; and program transmitting means for transmitting to the receiving apparatus the program with the identification when the judging means judges that the receiving apparatus can execute the program.

An event that a program download becomes unavailable can be prevented by a transmitting apparatus that transmits a program to a receiving apparatus that receives and executes the program, the transmitting apparatus and the receiving apparatus being included in a download system, the transmitting apparatus comprising: program holding means for holding a plurality of programs and identifications thereof, the plurality of programs achieving basically the same function and requiring resources that satisfy different conditions; resource information holding means for holding a plurality of pieces of resource information which correspond to the plurality of programs on a one-to-one basis and each indicate resources necessary for an execution of a corresponding program; request receiving means for receiving a download request from the receiving apparatus; judging means for judging, from (a) two or more pieces of resource information corresponding to two or more programs that have an identification contained in the download request, among the plurality of programs and (b) receiving apparatus information contained in the download request, whether the receiving apparatus can execute the two or more programs, and when judging that the receiving apparatus can execute any of at least two programs among the two or more programs, selecting one out of the at least two programs; and program transmitting means for transmitting the program selected by the judging means to the receiving apparatus.

The above object is also fulfilled by a receiving apparatus for receiving and executing a program in a download system which also includes a transmitting apparatus for transmitting the program to the receiving apparatus, the transmitting apparatus holding a plurality of programs and identifications thereof, the plurality of programs achieving basically the same function and requiring resources that satisfy different conditions, the receiving apparatus comprising: information generating means for generating receiving apparatus information that indicates a use state of resources held by the receiving apparatus that are necessary for program executions; request transmitting means for transmitting to the transmitting apparatus a download request which contains (a) an identification of a download-target program and (b) the generated receiving apparatus information; selection receiving means for presenting to a user a plurality of pieces of characteristic information that are received from the transmitting apparatus and each indicate characteristics at an execution of a corresponding one of a plurality of programs having the identification contained in the download request, allowing the user to select one among the plurality of pieces of characteristic information, and receiving a selection result from the user; selection result notifying means for notifying the transmitting apparatus of the selection result; and program receiving means for receiving a program that corresponds to the selection result and is sent from the transmitting apparatus.

With the above construction, an event that a program download becomes unavailable is prevented, and when there are a plurality of download candidate programs for one request, a program can be selected in accordance with the user's intention.

A construction of the receiving apparatus for reducing the load on the judgment on whether a program can be downloaded is achieved by a receiving apparatus for receiving and executing a program in a download system which also includes a transmitting apparatus for transmitting the program to the receiving apparatus, the receiving apparatus comprising: first request transmitting means for transmitting to the transmitting apparatus the resource data request that contains the identification of a download-target program; resource data receiving means for receiving the piece of resource data sent from the transmitting apparatus in response to the resource data request; judging means for judging from the piece of resource data whether the receiving apparatus can execute the download-target program; second request transmitting means for, when the judging means judges that the receiving apparatus can execute the download-target program, transmitting the program request containing the identification of the download-target program; and program receiving means for receiving a program that is sent from the transmitting apparatus in response to the program request.

A construction of the transmitting apparatus for reducing the load on the judgment on whether a program can be downloaded is achieved by a transmitting apparatus that transmits a program to a receiving apparatus that receives and executes the program, the transmitting apparatus and the receiving apparatus being included in a download system, the transmitting apparatus comprising: program holding means for holding one or more programs and identifications thereof; resource data holding means for holding one or more pieces of resource data which correspond to the one or more programs on a one-to-one basis and each define resources necessary for an execution of a corresponding program; request receiving means for receiving either a resource data request or a program request from the receiving apparatus; and transmitting means for either (a) reading from the resource data holding means a piece of resource data corresponding to an identification contained in the received resource data request and transmitting the read piece of resource data to the receiving apparatus, or (b) reading from the program holding means a program corresponding to an identification contained in the received program request, and transmitting the read program to the receiving apparatus.

In the above receiving apparatus, the piece of resource data received by the resource data receiving means may be a resource acquisition script used for acquiring resources necessary for an execution of a corresponding program, and the judging means judges from a result of a provisional execution of the resource acquisition script received from the transmitting apparatus whether the receiving apparatus can execute the download-target program.

In the above transmitting apparatus, the one or more pieces of resource data held by the resource data holding means may be resource acquisition scripts used for acquiring resources necessary for executions of corresponding programs.

With the above constructions, it is possible to simplify the procedure of the judgment.

The above object can also be fulfilled by a receiving apparatus for receiving and executing a program in a download system which also includes a transmitting apparatus for transmitting the program to the receiving apparatus, the receiving apparatus comprising: first request transmitting means for transmitting to the transmitting apparatus a check script request that contains an identification of a download-target program; check script receiving means for receiving a check script sent from the transmitting apparatus in response to the check script request; judging means for judging from a result of an execution of the received check script whether the receiving apparatus can execute the download-target program; second request transmitting means for, when the judging means judges that the receiving apparatus can execute the download-target program, transmitting the program request containing the identification of the download-target program; and program receiving means for receiving a program that is sent from the transmitting apparatus in response to the program request.

The above object can also be fulfilled by a transmitting apparatus that transmits a program to a receiving apparatus that receives and executes the program, the transmitting apparatus and the receiving apparatus being included in a download system, the transmitting apparatus comprising: program holding means for holding one or more programs and identifications thereof; check script holding means for holding one or more check scripts which correspond to the one or more programs and are each used to check whether the receiving apparatus has either of a device function and an embedded-program function that is necessary for an execution of a corresponding program; request receiving means for receiving either a check script request or a program request from the receiving apparatus; and transmitting means for either (a) reading from the check script holding means a check script corresponding to an identification contained in the received check script request and transmitting the read check script to the receiving apparatus, or (b) reading from the program holding means a program corresponding to an identification contained in the received program request, and transmitting the read program to the receiving apparatus.

The above constructions prevent a wasteful download of a program that cannot be executed due to lack of certain functions of devices or programs in the receiving apparatus.

### BRIEF DESCRIPTION OF THE DRAWINGS

These and the other objects, advantages and features of the invention will become apparent from the following description thereof taken in conjunction with the accompanying drawings which illustrate a specific embodiment of the invention.

In the drawings:
FIG. 1 is a block diagram showing the construction of a download system 1 in Embodiment 1;
FIG. 2 is a sequence diagram showing the procedure of the download process and the flow of information in the download process in Embodiment 1;
FIG. 3 shows the resource management table and an example of resource management information stored in the table in Embodiment 1;
FIG. 4 shows the construction of the storage area management table 400 and an example of storage area information stored in the table;
FIG. 5 shows the construction and contents of a download request in Embodiment 1;
FIG. 6 shows the construction and contents of the program management table in Embodiment 1;
FIG. 7 shows the construction and contents of the resource usage information in Embodiment 1;
FIG. 8 roughly shows the contents of the system request information in Embodiment 1;
FIG. 9 shows the construction and contents of allocation information in Embodiment 1;
FIG. 10 shows the construction and contents of program information in Embodiment 1;
FIGs. 11A and 11B specifically show how a program is rewritten by the rewriting unit in Embodiment 1;
FIG. 12 is a flowchart of the operation of the receiving apparatus in Embodiment 1;
FIG. 13 is a flowchart of the operation of the transmitting apparatus in Embodiment 1;
FIGs. 14A and 14B shows the contents of the storage area information before and after the updating in Embodiment 1;
FIGs. 15A and 15B show the contents of the resource management tablebefore and after it is updated in Embodiment 1;
FIG. 16 is a block diagram showing the construction of a download system 2 in Embodiment 2;
FIG. 17 shows the construction and contents of the program management table in Embodiment 2;
FIGs. 18A, 18B, and 18C show the resource usage information related to the three programs held by the transmitting apparatus in Embodiment 2;
FIG. 19 is a block diagram showing the construction of a download system 3 in Embodiment 3;
FIG. 20 is a sequence diagram showing the procedure of the download process and the flow of information in the download process in Embodiment 3;
FIG. 21 shows an example of the construction and contents of resource usage information in Embodiment 3;
FIG. 22 shows an example of the construction and contents of the program information in Embodiment 3;
FIG. 23 shows a program selection screen displayed by the interface unit in Embodiment 3;
FIG. 24 is a block diagram showing the construction of a download system 4 in Embodiment 4;
FIG. 25 is a sequence diagram showing the procedure of the download process and the flow of information in the download process in Embodiment 4;
FIG. 26 shows a specific example of the resource script in Embodiment 4;
FIG. 27 shows an example of the construction and contents of a resource information table in Embodiment 4;
FIGs. 28A and 28B specifically show how a download program is rewritten in Embodiment 4;
FIG. 29 is a flowchart showing the procedure of the receiving apparatus in Embodiment 4;
FIG. 30 is a flowchart showing the procedure of the transmitting apparatus in Embodiment 4;
FIG. 31 is a block diagram showing the construction of a download system 5 in Embodiment 5;
FIGs. 32A and 32B show examples of check scripts in Embodiment 5; and
FIG. 33 shows an example of a check-target program in Embodiment 5.

### DESCRIPTION OF THE PREFERRED EMBODIMENT

The following describes a download system of the present invention by way of describing its embodiments with reference to the attached drawings.

### Embodiment 1

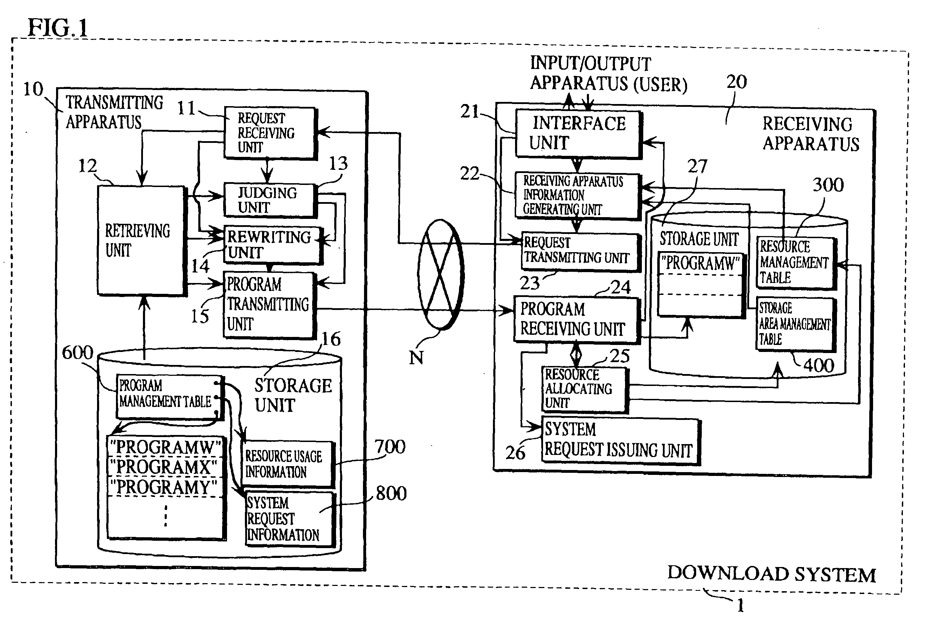

FIG. 1 is a block diagram showing the construction of a download system 1 in the present embodiment. The download system 1 includes a transmitting apparatus 10 and a plurality of receiving apparatuses 20 (only one of them is illustrated for convenience's sake), where the transmitting apparatus 10 is connected via a network N to each of the plurality of receiving apparatuses 20 so as to communicate bidirectionally with each other. Programs are downloaded from the transmitting apparatus 10 to the receiving apparatuses 20 on demand from the receiving apparatuses 20. More specifically, the transmitting apparatus 10 is a cable television (CATV) broadcasting station, and the receiving apparatuses 20 are set top boxes connected to TV receivers at home. The programs to be downloaded are provided by the broadcasting station. The programs such as Electronic Program Guide (EPG) allow the users to obtain services such as viewing of broadcast programs and preselecting broadcast programs to be recorded.

A program download performed by a receiving apparatus is based on the premise that storage areas for storing the program can be assigned, and that resources necessary for executing the program can be used.

### Outline of Download Process

Now, a program download process will be explained, together with various requests and information transferred between the transmitting apparatus 10 and the receiving apparatuses 20 during the program download process.

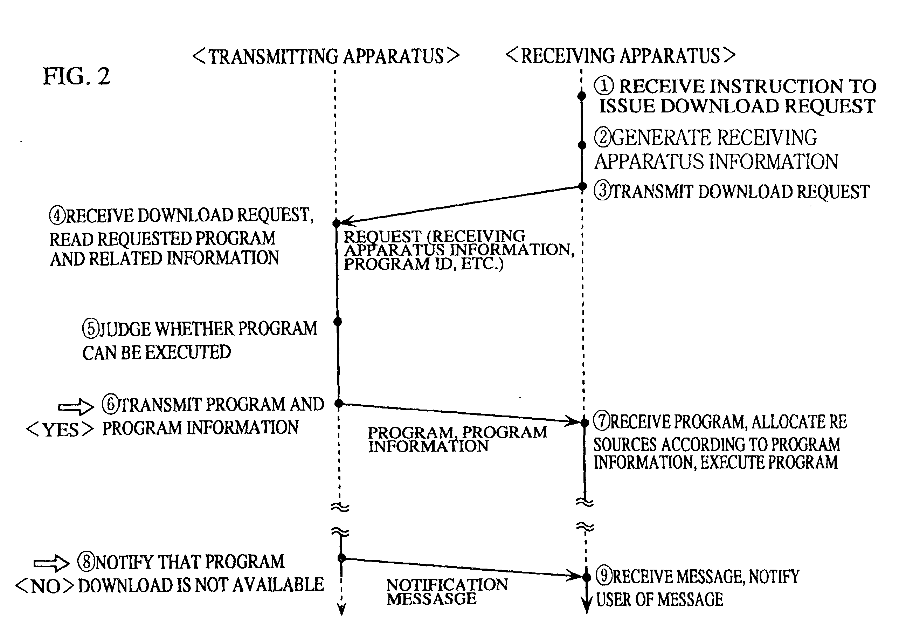

FIG. 2 is a sequence diagram showing the procedure of the download process and the flow of information in the download process.

The process starts as a user requests a receiving apparatus 20 to issue a program download request (①). The receiving apparatus 20 generates "receiving apparatus information" that is information concerning the program execution environment (i.e., whether storage areas for storing the program can be assigned, and whether resources necessary for executing the program can be used) of the apparatus at the time it receives the user request (②). The receiving apparatus 20 generates a download request by combining the receiving apparatus information with program identification and other information, and sends the download request to the transmitting apparatus 10 (③).

After receiving the download request from the receiving apparatus 20, the transmitting apparatus 10 reads a program among a plurality of programs for download stored inside that corresponds to the program identification included in the received request, and also reads out information relating to the program (④). The "information relating to the program" includes information concerning the resources necessary for the execution of the program (resource usage information). The transmitting apparatus 10 judges whether the read-out program can be executed in the receiving apparatus 20 (i.e., whether the receiving apparatus 20 can use the resources necessary for the execution of the program) by referring to the resource usage information and the receiving apparatus information received from the receiving apparatus 20 (⑤). When judging that the program can be executed, the transmitting apparatus 10 generates information necessary for the execution of the program (i.e., "program information" indicating the resources to be allocated to the program, and "system request information" indicating the contents of a system request at the program execution), and transmits the generated information to the receiving apparatus 20 together with the program (⑥).

The receiving apparatus 20 receives and stores the program, allocates the resources indicated by the program information, issues a necessary system request, and executes the program (⑦).

When it judges that the program cannot be executed in ⑤, the transmitting apparatus 10 sends a message "download not available" to the receiving apparatus 20. Receiving the message, the receiving apparatus 20 urges the user to re-request the issuance of the download request after ending currently executed programs so that the necessary resources become available.

### Construction

Now, the construction of the download system 1 for executing the download process will be described with reference to FIG. 1 for each of the receiving apparatus 20 and the transmitting apparatus 10 separately.

### Construction of Receiving Apparatus

The receiving apparatus 20 includes the following components relating to the download process: an interface unit 21 for achieving an interface with a user; a receiving apparatus information generating unit 22 for generating the receiving apparatus information; a request transmitting unit 23 for transmitting the download request to the transmitting apparatus 10; a program receiving unit 24 for receiving a downloaded program; a resource allocating unit 25 for allocating resources necessary for executing the program; a system request issuing unit 26 for issuing a system request necessary for executing the program; and a storage unit 27 for storing various types of information.

The interface unit 21, after receiving from the user a program download request via input means (not illustrated) such as a keyboard, sends program identification to the request transmitting unit 23 instructing it to send a request to the transmitting apparatus 10, and instructs the receiving apparatus information generating unit 22 to generate resource information. Also, the interface unit 21 generates a message for conveying a result of the program download process to the user, and displays the message on a display apparatus (not illustrated).

The receiving apparatus information generating unit 22 is activated upon receipt of an instruction from the interface unit 21, generates receiving apparatus information in accordance with the contents of a resource management table 300 and a storage area management table 400 that are stored in the storage unit 27 at the time of the activation, and outputs the generated receiving apparatus information to the request transmitting unit 23. The resource management table 300 stores information for managing the use state of the resources necessary for executing the program. The storage area management table 400 stores information for managing the use state of an area for storing the downloaded program.

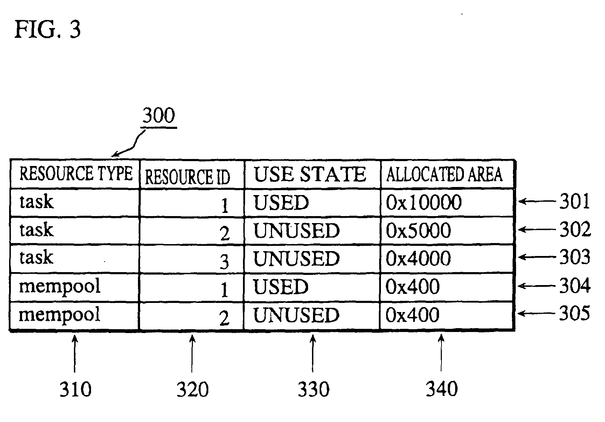

FIG. 3 shows the resource management table 300 and an example of resource management information stored in the table. As shown in FIG. 3, the resource management table 300 stores pieces of resource management information 301-305 corresponding to the resources used for the execution of the downloaded program, where the resources are classified into resources for task and resources for memory pool.

Each piece of resource management information includes: "resource type field 310" for indicating the resource type; "resource ID field 320" containing an ID uniquely assigned to the resource; "use state field 330" indicating whether the resource is used or not; and "allocated area field 340" indicating the size of an area allocated to the resource.

The resource type field 310 contains either "task" indicating a resource for task or "mempool" indicating a resource for memory pool. The "resource for task" is an area used by an OS for management of the tasks executed by the program. More specifically, the "resource for task" area stores the Task Control Block (TCB). The number of tasks that can be executed simultaneously during execution of a program is restricted by the number of resources for task. For example, in an environment in which only two resources for task are available, such a program as demands that three of more tasks run simultaneously cannot be executed. The "resource for memory pool" is an area for storing information used by an OS for management of the working memory that is used to execute the program.

The resource ID field 320 contains an identification of the resource. Identifications are unique for each type of resource.

The use state field 330 contains either: "USED" indicating that the resource is being used for execution of any downloaded program and that it is not available; or "UNUSED" indicating that the resource is not being used by any downloaded programs and that it is available for the execution of a newly downloaded program.

The resource management table 300 shown in FIG. 3 indicates that the receiving apparatus 20 has three resources for task and two resources for memory pool and that of these, one resource for task with resource ID "1" is being used and one resource for memory pool with resource ID "1" is being used.

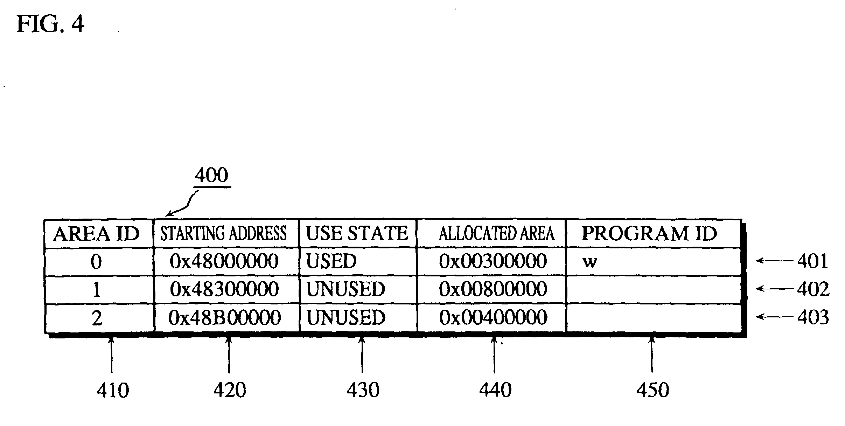

FIG. 4 shows the construction of the storage area management table 400 and an example of storage area information stored in the table. .

Each of the pieces of storage area information 401-403 includes: "area ID field 410" containing an ID uniquely assigned to the storage area; "starting address field 420" indicating a memory address of the storage area; "use state field 430" indicating the use state of the storage area, where "USED" indicates that the storage area is being used, and "UNUSED" indicates that the storage area is not being used (in other words, the use state field 430 indicates whether any downloaded programs are being stored); "allocated area field 440" indicating the size of the storage area; and "program ID field 450" containing the identification of the downloaded program stored in the storage area.

The storage area management table 400 shown in FIG. 4 indicates that the receiving apparatus 20 has three storage areas, and that of these, a program storage area with area ID "0" stores a downloaded program with an identification "w". Taking the contents of the resource management table 300 shown in FIG. 3 into consideration, it is understood that the program "w" is currently running using a resource for task and a resource for memory pool.

The request transmitting unit 23 is activated according to an instruction from the interface unit 21, waits for the receiving apparatus information to be output from the receiving apparatus information generating unit 22, and transmits a program download request, which is composed of the program identification received from the interface unit 21 and the receiving apparatus information received from the receiving apparatus information generating unit 22, to the transmitting apparatus 10. It should be noted here that the request transmitting unit 23 adds a hardware serial number of the receiving apparatus 20 (an identification of a requester), which is stored in the request transmitting unit 23 beforehand, to the download request before the transmission.

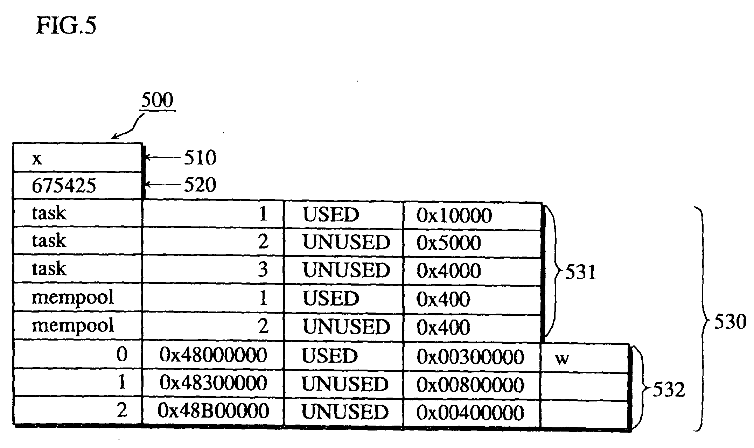

FIG. 5 shows the construction of a download request 500 to be sent from the request transmitting unit 23 to the transmitting apparatus 10, and an example of the contents of the download request 500.

As shown in FIG. 5, the download request 500 includes: a program identification 510 that is an identification of a program to be downloaded according to a download request; a hardware serial number 520 that is an identification of the receiving apparatus 20 as the requester; and receiving apparatus information 530 that is a combination of a resource management information field 531 and a storage area information field 532, where the resource management information field 531 is the contents of the resource management table 300 (see FIG. 3), and the storage area information field 532 is the contents of the storage area management table 400 (see FIG. 4).

The program receiving unit 24 receives a program that is sent from the transmitting apparatus 10 in response to a request transmitted from the request transmitting unit 23, temporarily stores the program in an embedded memory (not illustrated), and outputs program information (which is information required for allocating resources to the program, and will be detailed later) and system request information (which is information related to a system request necessary for starting the program, and will be detailed later), which are received together with the program, to the resource allocating unit 25 and the system request issuing unit 26, respectively.

After receiving a notification from the resource allocating unit 25 that a resource allocation has completed, the program receiving unit 24 stores the temporarily stored program into the program storage area in the storage unit 27.

When receiving the message "download not available" from the transmitting apparatus 10, the program receiving unit 24 instructs the interface unit 21 to display a message corresponding to the received message.

The resource allocating unit 25 allocates (1) a storage area for storing the downloaded program and (2) a resource that is necessary for executing the program, in accordance with the program information received from the program receiving unit 24. More specifically, the resource allocating unit 25 updates the resource management table 300 to clearly indicate the resources to be used (i.e., by changing the contents of the use state field 330 in a piece of resource management information corresponding to the resource to be used, from "UNUSED" to "USED"), and changes the contents of the use state field 430 in a piece of storage area information corresponding to the storage area to be used, from "UNUSED" to "USED", in order to declare the use of the storage area.

The system request issuing unit 26 issues a system request that contains requests to control the system re-start, the execution of the downloaded program or the like, in accordance with the contents of the system request information received from the program receiving unit 24.

The storage unit 27 stores the resource management table 300 and the storage area management table 400, as well as the downloaded program.

### Construction of Transmitting Apparatus 10

The transmitting apparatus 10 includes: a request receiving unit 11 for receiving a download request; a retrieving unit 12 for retrieving the requested program; a judging unit 13 for judging whether the program can be downloaded (i.e., whether the receiving apparatus as the requester can execute the program); a rewriting unit 14 for rewriting a certain portion of the program so that the program is adequately executed by the receiving apparatus; a program transmitting unit 15 for transmitting a program; and a storage unit 16 storing various programs as objects of downloading and information related to the programs.

First, various types of information stored in the storage unit 16 will be described.

The storage unit 16 stores, in addition to the programs and the related information, a program management table 600 for management of the storage positions of the programs and the related information so that the programs and information can be quickly read out in response to the download requests.

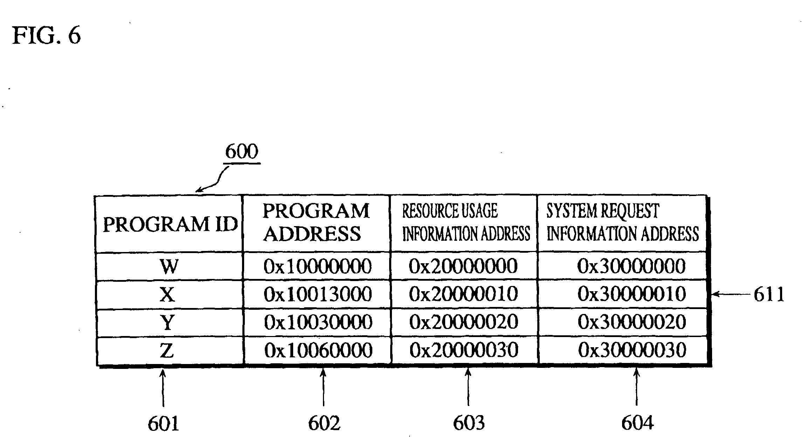

FIG. 6 shows the construction of the programmanagement table 600 and an example of its contents. As shown in FIG. 6, the program management table 600 stores apiece of program management information for each program stored in the storage unit 16. The program management information is composed of: a program ID field 601 indicating an identification of the program; a program address field 602 indicating a storage position of the program in the storage unit 16; a resource usage information address field 603 indicating a storage position of information related to the program; and a system request information address field 604.

The program ID field 601 contains an identification of the program which corresponds to the program identification 510 (see FIG. 5) that is sent from the receiving apparatus together with the download request 500.

The program address field 602 indicates a storage position (address) of the program in the storage unit 16.

The resource usage information address field 603 indicates a storage position (address) of resource usage information that indicates (a) a resource necessary for the execution of the program and (b) a required size of an area for storing the program.

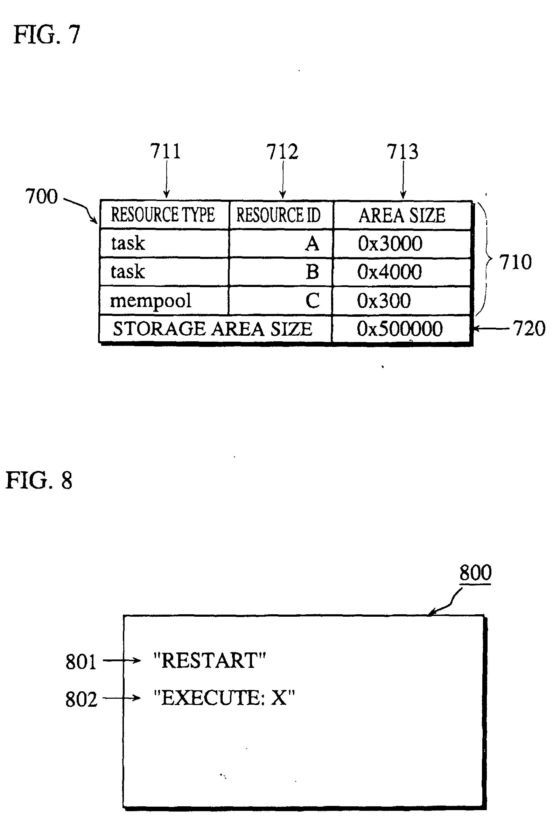

FIG. 7 shows the construction and contents of an example of a resource usage information 700 that corresponds to a download-object program with program ID "x" (hereinafter referred to as "program x") whose information is contained in the program management information 611 shown in FIG. 6. The resource usage information 700 is roughly divided into a resource field 710 and a storage area field 720. The resource field 710 contains information related to a resource necessary for the execution of the program x, and the storage area field 720 contains information indicating the required size of an area for storing the program x.

The resource field 710 is composed of; a resource type field 711 indicating a resource type; a resource ID field 712 indicating a resource ID; and an area size field 713 indicating the required size of an area for the resource. The resource usage information 700 shown in FIG. 7 indicates that an execution of the program x requires two resources for task and one resource for memory pool, that of these, a resource for task with resource ID "A" requires area size "0x3000", a resource for task with resource ID "B" requires area size "0x4000", and a resource for memory pool with resource ID "C" requires area size "0x300".

Back to the explanation of the programmanagement table 600 shown in FIG. 6, the system request information address field 604 indicates a storage position of the system request information that shows the contents of the system request that should be issued for the execution of the program.

FIG. 8 roughly shows the contents of the system request information. The contents shown in FIG. 8 are represented by characters for the sake of convenience. In reality, however, the system request is written in a programming language. The example shown in FIG. 8 requests the system to end before the program execution then to restart. The "RESTART" 801 indicates that the system request is requesting the system to restart. The "EXECUTE:X" 802 indicates that the system request is requesting a program with identification "X" to be executed.

Up to now, various types of information stored in the storage unit 16 have been described. Now, the operation of each component of the transmitting apparatus 10 will be described.

When receiving the download request 500 (see FIG. 5) from the receiving apparatus 20, the request receiving unit 11 outputs the program identification 510, which is included in the received download request 500, to the retrieving unit 12, instructing it to retrieve the program, and outputs the contents of the receiving apparatus information 530 to the judgment unit 13. The request receiving unit 11 also outputs the hardware serial number 520 of the receiving apparatus 20 to the rewriting unit 14.

The retrieving unit 12 searches the program ID field 601 in the program management table 600 for a program ID corresponding to a value of the program identification 510 output from the request receiving unit 11, and reads a piece of program management information corresponding to the requested program.

The retrieving unit 12 then reads the requestedprogram, a piece of resource usage information 700 (see FIG. 7) corresponding to the program, and the system request information 800 (see FIG. 8) from the storage unit 16 in accordance with the read-out piece of program management information (see FIG. 6), and outputs the read program, resource usage information, and system request information to the program rewriting unit 14, the judging unit 13, and the program transmitting unit 15, respectively.

The judging unit 13 judges whether the receiving apparatus 20 that requested the program can execute the program, based on the contents of the receiving apparatus information 530 obtained from the request receiving unit 11 and the resource usage information 700 obtained from the retrieving unit 12.

The procedure for the judgment is as follows. First, the judging unit 13 makes two judgments as to: whether the receiving apparatus 20 can allocate an enough storage area for storing the program; and whether the receiving apparatus 20 can allocate the resources necessary for executing the program. When the two conditions are satisfied, it is judged that the receiving apparatus 20 can execute the program.

The judgment process performed by the judging unit 13 will be described more specifically using a sample case of downloading the program x, with reference to FIGs. 5 and 7.

First, regarding with the judgment as to whether the receiving apparatus 20 can allocate a storage area with enough size for storing the program, the judging unit 13 refers to (a) the storage area information field 532 in the receiving apparatus information 530 and (b) the storage area field 720 in the resource usage information 700.

Of these, from the contents of the storage area information field 532 shown in FIG. 5, it is found that the receiving apparatus 20 has two "UNUSED" storage areas for storing the program with the size of "0x00800000" and "0x00400000", respectively. Also, the storage area field 720 in the resource usage information 700 shows that the necessary size of the area for storing the programx requested to be downloaded is 0x500000. From these information it is found that the program can be stored in one of the two "UNUSED" storage areas that has the size of "0x00800000". This indicates that the first condition concerning the storage area for storing the program is satisfied.

Secondly, regarding with the judgment as to whether the receiving apparatus 20 can allocate the resources necessary for executing the program, the judging unit 13 refers to (a) the resource management information field 531 in the receiving apparatus information 530 and (b) the resource field 710 in the resource usage information 700.

From the contents of the resource field 710, it is found that three resources (two resources for task and one resource for memory pool) are required to execute the program x. To check whether the receiving apparatus 20 can allocate these resources, the judging unit 13 refers to the resource management information field 531 for resource. It is found that the resource for task with identification "A" (hereinafter referred to as "required task resource A") requires an area with the size of "0x3000". The resource management information field 531 indicates that the receiving apparatus 20 has two "UNUSED" resources for task with resource ID "2" and "3" which have the size of "0x5000" and "0x4000", respectively. Accordingly, it is found that the receiving apparatus 20 can allocate the resource for task with resource ID "2" as the required task resource A, and that at the same time, the receiving apparatus 20 can allocate the resource for task with resource ID "3" as the resource for task with identification "B" (hereinafter referred to as "required task resource B").

Similarly, it is found that the receiving apparatus 20 can allocate the only "UNUSED" resource for memory pool task with resource ID "2" as the resource for memory pool with identification "C". From all these information, it is found that the receiving apparatus 20 can allocate all the resources necessary for executing the program x. As a result, since the two conditions concerning (a) storage area for storing the program and (b) resources necessary for executing the program are satisfied, the judging unit 13 judges that the receiving apparatus 20 can execute the program.

After judging that the receiving apparatus 20 can execute the program, the judging unit 13 generates allocation information that shows the resources of the receiving apparatus 20 allocated as the resources required for the execution of the program, and outputs the generated allocation information to the rewriting unit 14.

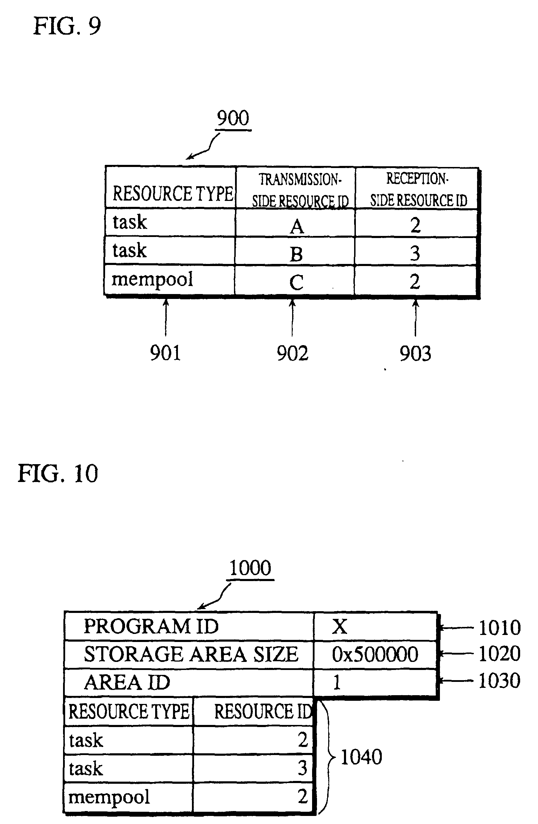

FIG. 9 shows the construction and contents of allocation information 900 (in the case of the program x) generated by the judging unit 13. The allocation information 900 shows the correspondence between identifications of the necessary resources for the execution, which were assigned by the transmitting apparatus 10, and identifications of the resources of the receiving apparatus 20. This indicates which resources of the receiving apparatus 20 should be allocated as the resources necessary for executing a program. The allocation information 900 is composed of a resource type field 901, a transmission-side resource ID field 902, and a reception-side resource ID field 903. The correspondence between the identifications of the transmission-side and the reception-side are obtained through the above-described judgment process. That is to say, the receiving apparatus 20 allocates the resource with ID "2" as the resource for task with ID "A" assigned by the transmitting apparatus 10, the resource with ID "3" as the resource for task with ID "B", and the only "UNUSED" resource for memory pool with ID "2" as resource for memory pool with ID "C".

The judging unit 13 then generates the program information which is required by the receiving apparatus 20 when it stores the download-target program, and outputs the program information to the program transmitting unit 15.

FIG. 10 shows the construction and contents of program information 1000 (in the case of the program x).

The program information 1000 is composed of a program ID field 1010, a storage area size field 1020, an area ID field 1030, and a resource field 1040. The program ID field 1010 contains an identification of the download-target program. The storage area size field 1020 indicates the required size of an area for storing the program. The area ID field 1030 contains an identification of a storage area in the receiving apparatus 20 in which the program should be stored. The resource field 1040 indicates the types and resource IDs of the resources the receiving apparatus 20 should use when it executes the program. The program information 1000 is referred to by the resource allocating unit 25 of the receiving apparatus 20 when the receiving apparatus 20 updates the resource management table 300 and the storage area management table 400 during the storage and execution of the downloaded program.

When it judges that the receiving apparatus 20 cannot execute the program, the judging unit 13 notifies the program transmitting unit 15 of the judgment result, and does not generate the allocation information and the program information.

The rewriting unit 14 rewrites a portion of the program that is related to the resource usage, in accordance with the contents of the allocation information 900 so that the receiving apparatus 20 can execute the program, and outputs the rewritten program to the program transmitting unit 15. More specifically, the rewriting unit 14 rewrites the resource identifications assigned by the transmitting apparatus 10 to those of the corresponding resources used by the receiving apparatus 20. The reason why this rewriting is performed is that resources used by the plurality of receiving apparatuses 20 dynamically change from moment to moment depending on the resource use status of each apparatus. To accommodate the changes, the programs stored in the transmitting apparatus 10 contain dummy resource identifications in advance, then after a request is notified from a receiving apparatus and resources to be used in the receiving apparatus are determined, the rewriting unit 14 rewrites the dummy identifications to the identifications of the resources that are actually used in the receiving apparatus.

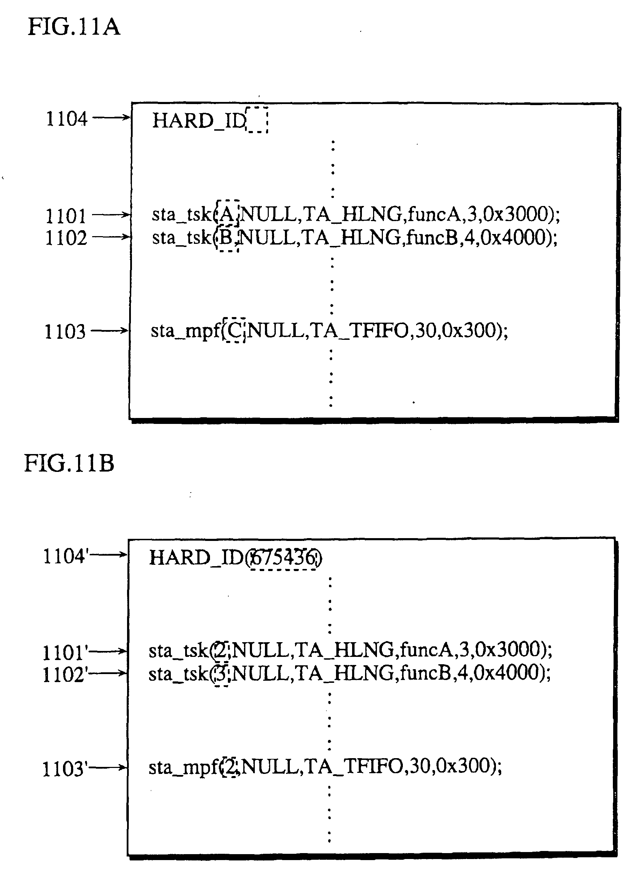

FIGs. 11A and 11B specifically show how a program is rewritten by the rewriting unit 14. Note that FIGs. 11A and 11B show a portion of the program list that is related to the resource usage.

FIG. 11A shows the contents of the program before a rewriting. In this drawing, the line 1101 relates to the use of the first resource for task, the line 1102 the use of the second resource for task, and the line 1103 the use of a resource for memory pool. All the resource IDs shown in FIG. 11A are dummy ("A", "B", and "C" which correspond to the identifications contained in the resource ID field 712 of the resource usage information 700 (refer to FIG. 7)). With such dummy identifications, it is impossible for the receiving apparatus to execute the program.

According to the contents of the allocation information 900 (refer to FIG. 9), the receiving apparatus 20 allocates the resource with ID "2" as the resource for task with ID "A" assigned by the transmitting apparatus 10, the resource with ID "3" as the resource for task with ID "B", and the resource for memory pool with ID "2" as resource for memory pool with ID "C". The rewriting unit 14 rewrites the program in accordance with the allocation information 900. FIG. 11B shows the results. As shown in the lines 1101 to 1103, the resource IDs of the resources for task and memory pool have been rewritten. The rewriting unit 14 also writes the hardware serial number "675435" of the receiving apparatus 20 received from the request receiving unit 11 onto the line 1104 having a space provided for writing of the hardware serial number of a receiving apparatus. Each receiving apparatus 20 is set so as not to execute a downloaded program if the program does not contain the hardware serial number. This arrangement prevents the program from being used improperly.

The program transmitting unit 15 transmits (a) the program information table 1000 output from the judging unit 13, (b) the rewritten program output from the rewriting unit 14, and (c) the system request information 800 output from the retrieving unit 12 altogether to the receiving apparatus 20.

### Operation

From now on, the operation of the program download process by the download system will be described with reference to the attached drawings.

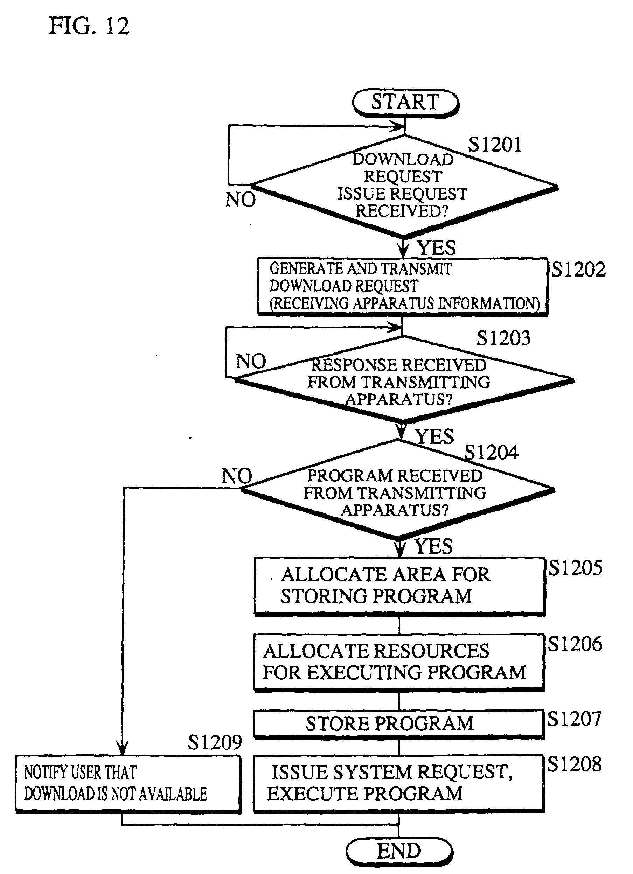

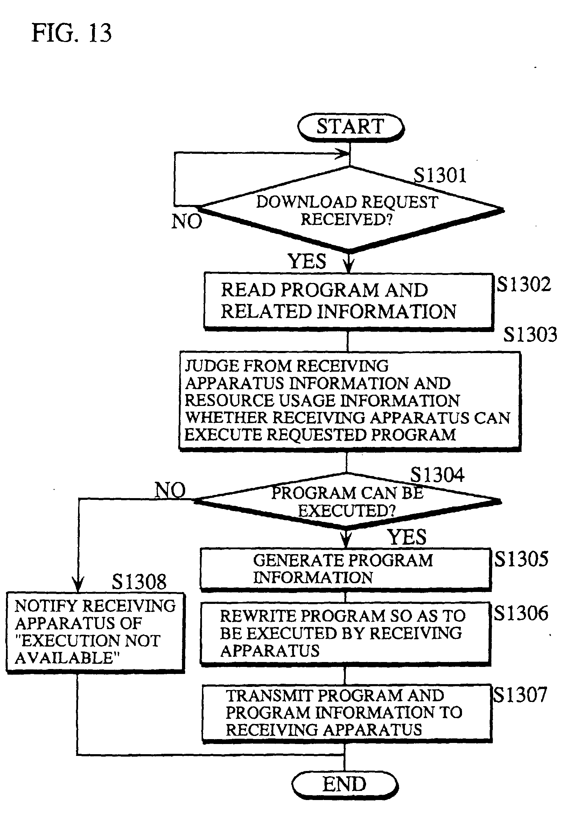

FIGs. 12 and 13 are flowcharts of the program download process performed by the receiving apparatus 20 and the transmitting apparatus 10, respectively. The download process starts when the receiving apparatus 20 receives a download request from a user. Accordingly, this description starts with the operation of the receiving apparatus 20 shown in FIG. 12.

The interface unit 21 receives (a) an instruction to issue a download request and (b) an identification of the download target program from a user (judged as YES in step S1201).

The receiving apparatus information generating unit 22 generates the receiving apparatus information based on the received instruction and information. The request transmitting unit 23 transmits a download request (see FIG. 5), which is a combination of the receiving apparatus information generated by the receiving apparatus information generating unit 22, the program identification received by the interface unit 21, and the hardware serial number of the receiving apparatus 20 that is held by the request transmitting unit 23, to the transmitting apparatus 10 (S1202).

After the receiving apparatus 20 transmits the download request, the performer of the process changes to the transmitting apparatus 10. From this time on, the operation of the transmitting apparatus 10 will be described with reference to FIG. 13.

On the transmitting apparatus 10's side, the request receiving unit 11 receives the download request from the receiving apparatus 20 (judged as YES in step S1301). The request receiving unit 11 outputs, among various pieces of information contained in the download request, the program identification, the receiving apparatus information (the storage area information field and the resource management information field), and the hardware serial number of the receiving apparatus 20 to the retrieving unit 12, the judging unit 13, and the rewriting unit 14, respectively.

The retrieving unit 12 refers to the program identification and obtains a piece of program management information (see FIG. 6) corresponding to the requested program, and outputs the program read out from the storage unit 16, the resource usage information 700 (see FIG. 7), and the system request information (see FIG. 8) to the rewriting unit 14, the judging unit 13, and the program transmitting unit 15, respectively (S1302).

The judging unit 13 judges, based on (a) the receiving apparatus information 530 received from the request receiving unit 11 and (b) the resource usage information 700 received from the retrieving unit 12, judges whether the requested program can be executed in the receiving apparatus 20 (i.e., whether the receiving apparatus 20 can allocate the resources necessary for the execution of the program) (S1303).

When judging that the program can be executed (judged as YES in step S1304), the judging unit 13 generates the program information 1000 (see FIG. 10) (S1305), generates the allocation information 900 (see FIG. 9) and outputs the generated rewriting information to the rewriting unit 14, instructing it to rewrite the program. In response to this, the rewriting unit 14 partially rewrites the program received from the retrieving unit 12, and outputs the rewritten program to the program transmitting unit 15 (S1306).

Upon receiving the rewritten program from the rewriting unit 14, the program transmitting unit 15 outputs the program information 1000, the system request information 800 received from the retrieving unit 12, and the rewritten program received from the rewriting unit 14 to the receiving apparatus 20 in the order (S1307).

It should be noted here that when the judging unit 13 judges that the requested program cannot be executed by the receiving apparatus (judged as NO in step S1304), the judging unit 13 instructs the program transmitting unit 15 to notify the receiving apparatus 20 of the judgment result, "EXECUTION NOT AVAILABLE" (S1308).

The operation in the download process by the transmitting apparatus 10 completes with this. From now on, the succeeding operation of the receiving apparatus 20 will be described with reference to FIG. 12.

The receiving apparatus 20 waits for a response from the transmitting apparatus 10, and resumes the operation after receives the response (judged as YES in step S1203).

When transmitting apparatus 10 sends the requested program in response to the download request (judged as YES in step S1204), the program receiving unit 24 receives the program and the program information 1000 attached to the program, then first outputs the program information to the resource allocating unit 25, instructing it to allocate the resources necessary for storing and executing the program.

In response to this, the resource allocating unit 25 updates, in accordance with the contents of the program information 1000, the storage area management table 400 (the storage area information) stored in the storage unit 27 to allocate a storage area for storing the downloaded program (S1205).

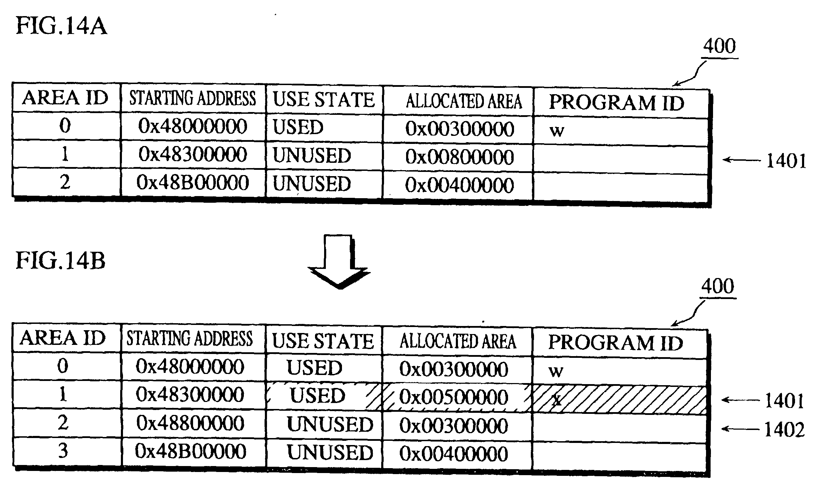

FIGs. 14A and 14B shows the contents of the storage area information before and after the updating in the case for storing the program x in the storage area with ID "1". FIG. 14A shows the contents of the storage area information before the updating, where the use state field of a piece of storage area information 1401 corresponding to the storage area with ID "1" contains "UNUSED", indicating that the storage area "1" is unused. The resource allocating unit 25 refers to the program information 1000 to find that the area ID field 1030 contains "1", and rewrites the use state field of the piece of storage area information 1401, which corresponds to the storage area "1", to "USED". The resource allocating unit 25 also writes "x", which is written in the program ID field 1010 of the program information 1000, into the program ID field of the piece of storage area information 1401. FIG. 14B shows the results of this updating of the storage area management table 400. This enables the downloaded program x to be stored in the storage area with area ID "1".

The resource allocating unit 25 recognizes that a portion having the size of "0x300000" of the storage area "1" having the size of "0x800000" remains unused after the program having the size of "0x530000" is stored in the storage area "1", and newly adds a piece of area management information 1402 so that the unused portion can be used as another separate storage area.

The resource allocating unit 25 then updates the resource management information in the resource management table 300 to allocate the resources necessary for executing the downloaded program x (S1206).

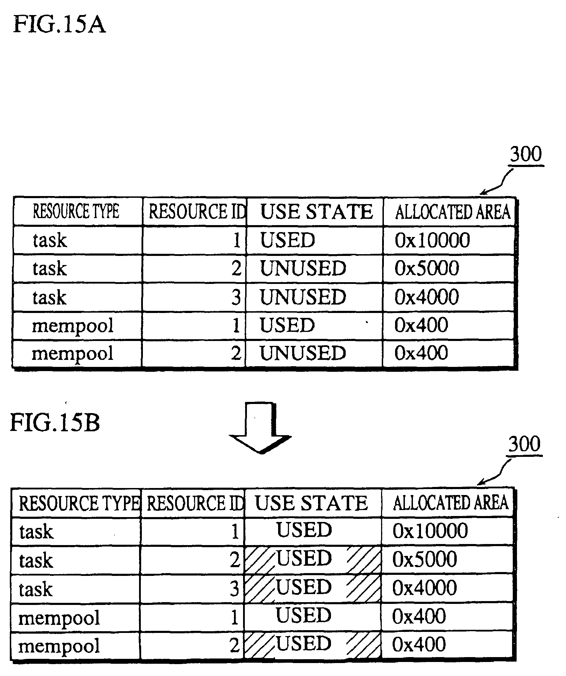

FIGs. 15A and 15B show the contents of the resource management table 300 before and after it is updated by the resource allocating unit 25 in accordance with the program information 1000 (see FIG. 10). As shown in FIG. 15A, in the resource management table 300 before the update, the two resources for task with IDs "2" and "3" and one resource for memory pool with ID "2" are UNUSED. According to the resource field 400 of the program information 1000, all these resources should be used to execute the program x. As a result, the resource allocating unit 25 rewrites the resource management table 300 to indicate that the two resources for task and the resource for memory pool are USED. FIG. 15B shows the results of this.

After completing the resource allocation as above, the resource allocating unit 25 notifies the program receiving unit 24 of it. Upon being notified of it, the program receiving unit 24 stores the received program into the storage area with ID "1" allocated by the resource allocating unit 25 (S1207).

After completing the reception and storage of the program, the program receiving unit 24 outputs the system request information (see FIG. 8) to the system request issuing unit 26, instructing it to issue the system request. The system request issuing unit 26 issues the system request (requesting the system to restart the system and execute the program x), the contents of which is based on the system request information received from the program receiving unit 24 (S1208). This allows the receiving apparatus 20 to execute the program x.

When the program receiving unit 24 receives a notification of "program execution not available" from the transmitting apparatus 10 (judged as NO in step S1204), the program receiving unit 24 instructs the interface unit 21 to present a message indicating "download not available" to the user (S1209).

### Conclusion

As described above, in the download system 1 in the present embodiment, the receiving apparatus 20 as the requester transmits the receiving apparatus information together with a program download request to the transmitting apparatus 10, and in response to this, the transmitting apparatus 10 judges, based on the receiving apparatus information, whether the receiving apparatus 20 can execute the requested program, and only when it judges as executable, the transmitting apparatus 10 downloads the program to the receiving apparatus 20. This prevents the receiving apparatus 20 from performing a wasteful process that a program that cannot be stored or executed by the receiving apparatus 20 is downloaded thereto.

### Embodiment 2

The download system in the present embodiment is characterized in that the transmitting apparatus holds spare programs as well as standard programs, both as the programs to be downloaded, where the spare programs are the same as the standard programs except for the size of the resources required for the program execution, and that the transmitting apparatus selects for each download request a program to be transmitted for the download out of the standard and spare programs on the condition that the selected program can be surely stored and executed by the receiving apparatus that requested a download, by taking into account the state of the resources that can be allocated by the receiving apparatus. The sequence of the download process in the present embodiment is the same as that of Embodiment 1 (see FIG. 2) except that the judgment on whether the program can be executed in ⑤ is replaced with "selection of an executable program".

### Construction

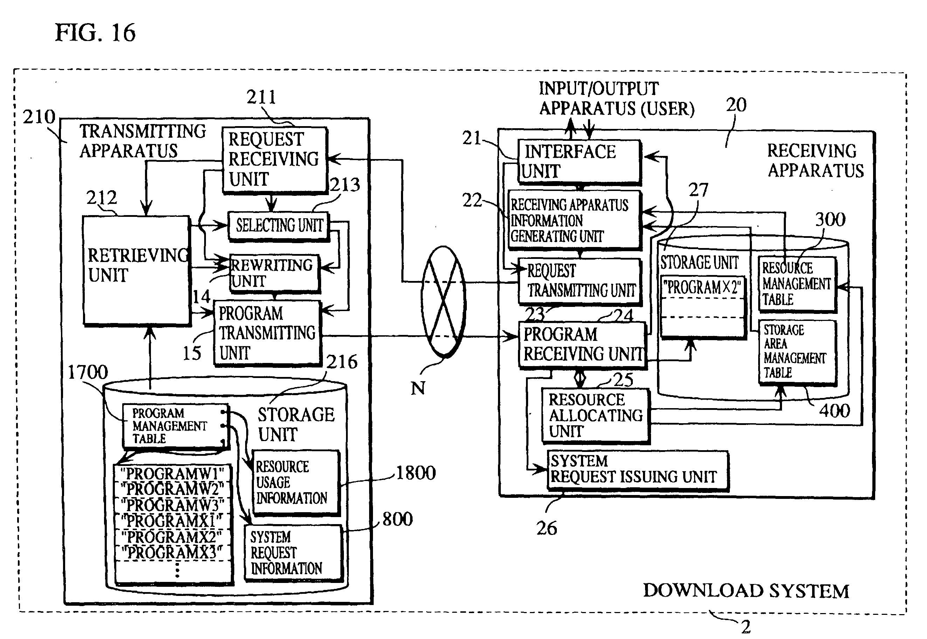

FIG. 16 is a block diagram showing the construction of a download system 2 in the present embodiment. The same components as those in the download system 1 in Embodiment 1 are assigned with the same reference numbers and they are not detailed here. The processes unique to the present embodiment is only performed by a transmitting apparatus 210, and the construction and operation of the receiving apparatus 20 is not different from those in Embodiment 1.

The transmitting apparatus 210 differs from the corresponding apparatus in Embodiment 1 in the programs and the resource usage information stored in the storage unit 216, and the contents of the program management information that manages these program and information. The transmitting apparatus 210 also includes a selecting unit 213 instead of the judging unit 13 in Embodiment 1. Further, the processes performed by the program retrieving unit 212 and the request receiving unit 211 are partially different from Embodiment 1.

First, the program and the relating information stored in the storage unit 216 will be described. The programs, a program management table 1700, and a resource usage information 1800 are different from Embodiment 1.

The storage unit 216 stores a plurality of sets of programs, each of which includes a standard program and spare programs that achieve basically the same function and are different in size in storage areas and resources they require.

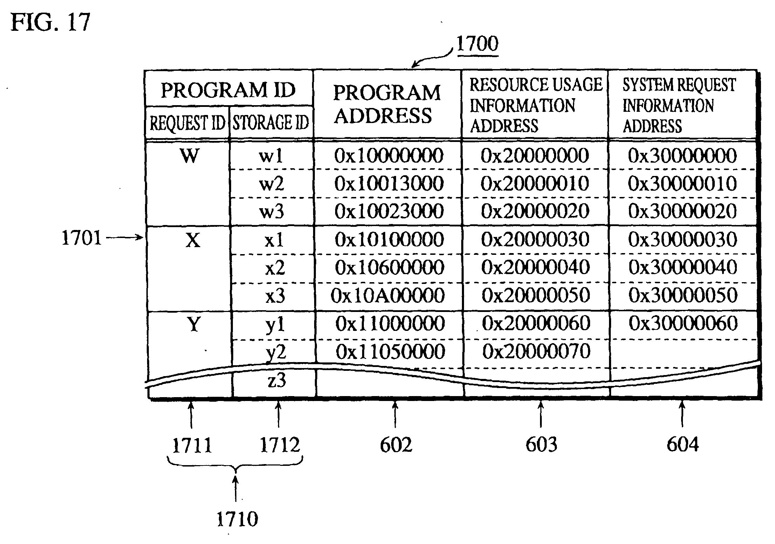

FIG. 17 shows the construction and contents of the program management table 1700 in the present embodiment. The portions that are also included in the program management table 600 in Embodiment 1 have the same reference numbers, and are not detailed here.

The program ID field 1710 stores information that indicates relationships between the program IDs sent from the receiving apparatus 20 together with the requests and the program IDs assigned to the programs held by the transmitting apparatus 210, and is divided into a request ID field 1711 and a storage ID field 1712. The request ID field 1711 contains program IDs used by the receiving apparatus 20 in specifying download-target programs. The storage ID field 1712 contains program IDs of standard programs and spare programs corresponding to each download-target program.

This will be described more specifically with reference to the program management information 1701 (in the case of the program corresponding to request ID "x"). For a program x download request (request ID: x) received from the receiving apparatus 20, three programs (with storage IDs x1, x2, and x3) can be transmitted in response. The three programs are stored at different positions (locations indicated by the addresses in the program address field 602) and have unique resource usage information (stored in the areas indicated by the resource usage information address field 603) and system request information (stored in the areas indicated by the system request information address field 604).

Secondly, the resource usage information in the present embodiment will be described.

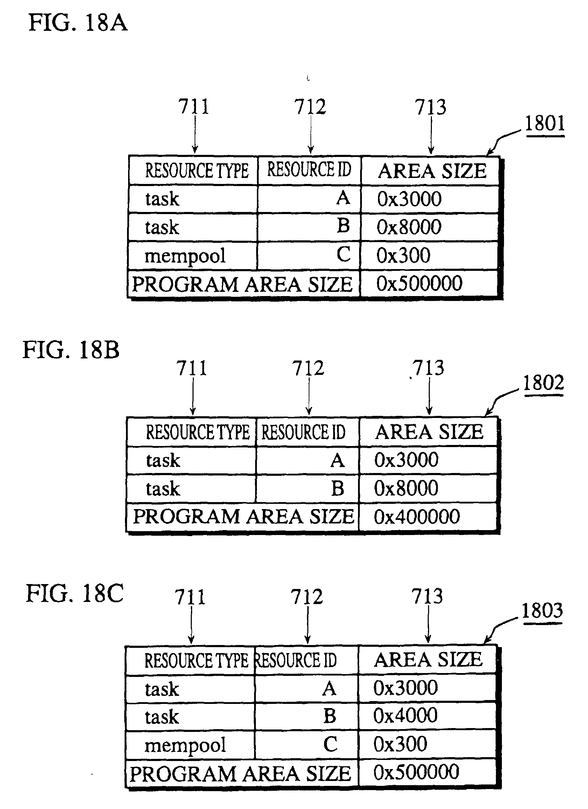

FIGs. 18A, 13B, and 18C show the resource usage information related to the three programs (with storage IDs x1, x2, and x3) held by the transmitting apparatus 210 in correspondence to the request ID x. FIG. 18A corresponds to a program corresponding to value "x1" in the storage ID field 1712, FIG. 18B to a program corresponding to value "x2", and FIG. 18C a program corresponding to value "x3". The three pieces of resource usage information are different from each other in the size of the storage areas, the number of resources they use, or the like.

The resource usage information 1801 (for program x1) shown in FIG. 18A relates to a standard program. In contrast, the resource usage information 1802 (for program x2) shown in FIG. 18B indicates that the number of task resources required for the execution of program x2 is lower than that of program x1 by "1". Also, the resource usage information 1803 (for program x3) shown in FIG. 18C indicates that the number of task resources required for the execution of program x3 is the same as that of program x1, but the size of a task resource (ID: B) is smaller.

Thirdly, the processes unique to the present embodiment will be described for each of the components in charge.

The request receiving unit 211 receives a download request 500 from the receiving apparatus 20, and outputs, among various pieces of information contained in this request, program identification 510 to the retrieving unit 212, and receiving apparatus information 530 to the selecting unit 213.

The program retrieving unit 212 searches the program management table 1700 on a key that is an identification 510 output from the request receiving unit 211, and reads out a piece of program management information corresponding to a value in the request ID field 1711 that matches the identification 510. The program retrieving unit 212 then reads out from the storage unit 216 all pieces of resource usage information relating to the requested program, based on the read-out piece of program management information (see FIG. 17), and outputs the read-out pieces of resource usage information to the selecting unit 213.

The program retrieving unit 212 then waits for the storage ID of a program that is selected as the download-target program by the selecting unit 213 to be notified from the selecting unit 213. After receiving the storage ID of the download-target program, the program retrieving unit 212 refers to the program management information and obtains the storage addresses of (a) the program corresponding to the received storage ID, and (b) the system request information, then reads out the program and system request information. The program retrieving unit 212 outputs the program to the rewriting unit 14, and the system request information to the transmitting unit 15.

The selecting unit 213 compares (a) the contents of receiving apparatus information 530 on the receiving apparatus 20 obtained from the request receiving unit 211 with (b) a plurality of pieces of resource usage information output from the program retrieving unit 212, and selects one executable program out of a set of programs corresponding to the program request ID requested from the receiving apparatus 20.

Now, the operation of the selecting unit 213 will be described with reference to specific examples of the receiving apparatus information (see FIG. 5) and resource usage information (FIG. 18), presuming that the receiving apparatus 20 transmitted a download request with program request ID x.

The selecting unit 213 first compares the size of usable, allocated storage area indicated by the storage area information field 532 of the receiving apparatus information 530 with each program area size of programs x1, x2, and x3 indicated by three pieces of resource usage information 1801, 1802, and 1803, respectively. The storage area information field 532 of the receiving apparatus information 530 indicates that two storage areas being "0x800000" and "0x400000" in size are unused. The storage areas for programs x1, x2, and x3 are "0x500000", "0x400000", and "0x500000" in size, respectively. It is found from this that each of the download programs x1, x2, and x3 can be stored in a larger one of the two unused storage areas in the receiving apparatus 20.

The selecting unit 213 then selects a program based on the resources necessary for executing the program. The resource management information field 531 of the receiving apparatus information 530 indicates that the unused resources that can be allocated by the receiving apparatus 20 to the execution of the download program are two task resources and one memory pool resource. On the other hand, the three pieces of resource usage information 1801, 1802, and 1803 indicate that the programs x1 and x3 each require two task resources and one memory pool resource, and that the program x2 requires one task resource and one memory pool resource. Accordingly, enough unused resources in number can be provided for each of the three programs.

However, the sizes of the two unused areas for task resources in the receiving apparatus 20 are "0x5000" and "0x4000", respectively, while the sizes of the two areas required for the task resources for the program x1 are "0x3000" and "0x8000", respectively (see the resource usage information 1801). From this comparison, it is understood that the program x1 cannot be executed even if it is downloaded to the receiving apparatus 20 because one of the required resources cannot be stored due to shortage of available space. It is found, however, that the programs x2 and x3 can be executed by the receiving apparatus 20 since there is no problem concerning the sizes of the required storage areas. The selecting unit 213 selects either the program x2 or x3, and sends the identification (storage ID) of the selected program to the program retrieving unit 212. In this example, it is presumed that the selecting unit 213 selects the program x2 requiring a smaller size of program storage area.

The succeeding operation of the selecting unit 213 is the same as that of the judging unit 13 in Embodiment 1. That is to say, the selecting unit 213 generates the allocation information (see FIG. 9) and outputs it to the rewriting unit 14. The selecting unit 213 also generates the program information table (see FIG. 10) and outputs it to the program transmitting unit 15.

When judging that no program can be executed in the receiving apparatus 20, the selecting unit 213 performs in the same way as the judging unit 13 in Embodiment 1. That is to say, the selecting unit 213 notifies the program transmitting unit 15 that the program download is not available.

After the selecting unit 213 selects a program, each component of the transmitting apparatus 210 (the rewriting unit 14 and the program transmitting unit 15) operates in much the same way as in Embodiment 1. That is to say, the rewriting unit 14 rewrites the program in accordance with the allocation information, and the program transmitting unit 15 transmits the rewritten program and the program information to the receiving apparatus 20.

### Operation

The operation of the receiving apparatus 20 in the present embodiment is the same as that in Embodiment 1 (see FIG. 12) and is not detailed here. The operation of the transmitting apparatus 210 is almost the same as that in Embodiment 1 (see FIG. 13) except that the step S1303 changes from "judgment of whether the program can be executed" to "selection of an executable program among a plurality of programs corresponding to the request".

### Conclusion

As described above, in the download system 2 in the present embodiment, the transmitting apparatus 210 holds a plurality of patterns of programs that perform in the same way but are different from each other in the size or number of the resources required for the program execution. When receiving a request from the receiving apparatus 20, the transmitting apparatus selects an executable program in accordance with the state of the receiving apparatus 20 and downloads the selected program to the receiving apparatus 20. This prevents an event that the downloaded program cannot be executed by the receiving apparatus 20. Also, compared with Embodiment 1, Embodiment 2 prevents an event more effectively that a program cannot be down loaded to the receiving apparatus 20 due to shortage of space for storing the resources.

### Embodiment 3

The following is a description of a download system as Embodiment 3 of the present invention. The download system in the present embodiment is characterized in that the receiving apparatus allows the user to perform a part of the program selection process that is performed, in Embodiment 2, by the selecting unit 213 of the transmitting apparatus 210 (the process of selecting a program among a plurality of programs executable in the receiving apparatus).

### Construction of Whole System

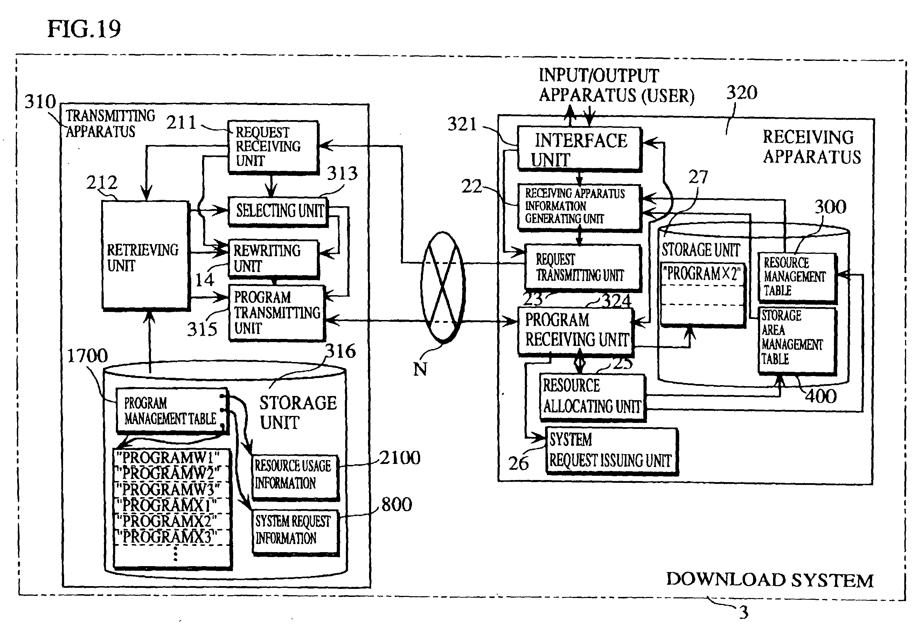

FIG. 19 is a block diagram showing the construction of a download system 3 in the present embodiment. The same components as those in the download system 2 in Embodiment 2 are assigned with the same reference numbers and they are not detailed here.

As is the case with Embodiment 2, the download system 3 in the present embodiment holds a plurality of patterns of download programs that are different from each other in the size of the area for storing the program or in the resources they use. Embodiment 3 differs from Embodiment 2 in that when receiving a request from a receiving apparatus 320, a transmitting apparatus 310 selects all the programs it judges can be executed in the receiving apparatus 320 among a plurality of programs corresponding to the request ID, and sends characteristic information showing the characteristics of the program to the receiving apparatus 320. The receiving apparatus 320 presents the characteristics of each program to the user, allows the user to select one among the programs based on the characteristics, and receives and executes the selected program. Prior to description of each component, an outline of the download process will be provided.

### Outline of Download Process

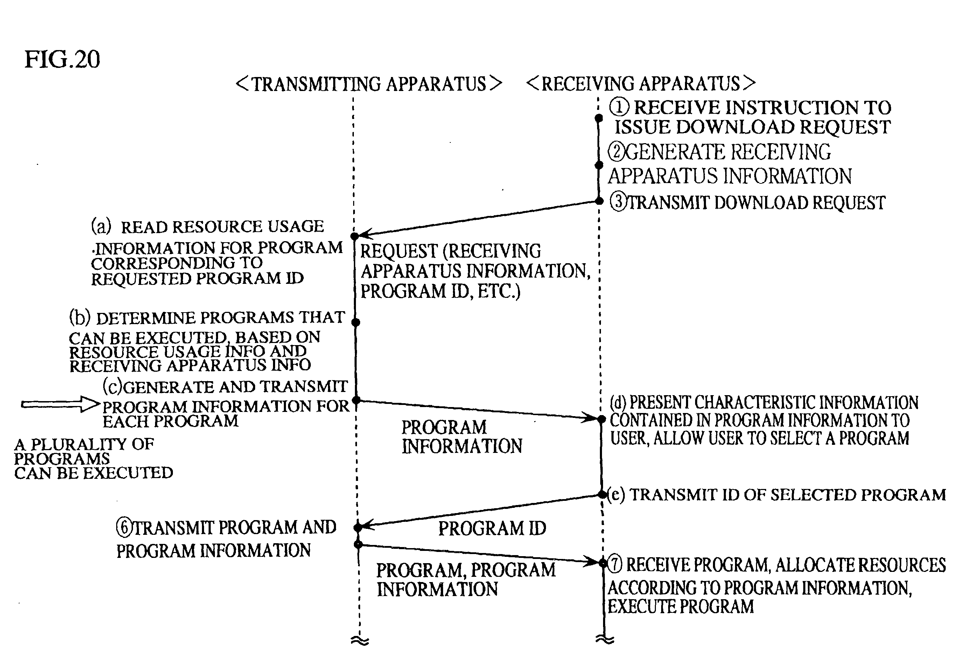

FIG. 20 is a sequence diagram showing the procedure of the download process and the flow of information in the download process. Description of the actions commonly performed in both FIG. 20 and FIG. 2 in Embodiment 1 is omitted here.

The operations performed by the receiving apparatus 320 after it receives an instruction from the user to issue a program download request until it sends a request to the transmitting apparatus 310 (①②③) are the same as Embodiment 1.

When receiving the request, the transmitting apparatus 310 (a) reads the resource usage information concerning a plurality of programs corresponding to the requested program ID (request ID), and (b) compares the read resource usage information with the receiving apparatus information that has been received with the request and selects all the programs that can be executed in the receiving apparatus 320.

The transmitting apparatus 310 then (c) transmits to the receiving apparatus 320 program information containing the characteristic information that indicates the characteristics of each of the programs selected in (b).

The receiving apparatus 320 (d) presents to the user the characteristic information for each program contained in the received program information, and allows the user to select one out of the plurality of proposed programs. The receiving apparatus 320 then (e) transmits the identification (storage ID) of the selected program to the transmitting apparatus 310. The succeeding process is the same as the process in Embodiment 1 after the transmission of the program (⑥ and ⑦ in FIG. 2). The actions succeeding to a selection by the selecting unit 313 of only one or no program that can be executed by the receiving apparatus 320 are the same as the actions ⑥- ⑨ in Embodiment 1 shown in FIG. 2.

Now, the operation of each component of the transmitting apparatus 310 and the receiving apparatus 320 will be described focusing on the actions (a)-(e) in the sequence diagram shown in FIG. 20.

### Construction of Transmitting Apparatus 310

The construction of the transmitting apparatus 310 will be described. The components that are the same as those in Embodiments 1 and 2 are assigned with the same reference numbers and will not be described here.

The unique processes of the present embodiment are performed by the selecting unit 313 and the program transmitting unit 315. The rewriting unit 14 of the present embodiment processes in the same way as in Embodiment 1 or 2, but may process a plurality of programs. The resource usage information stored in the storage unit 316 additionally includes the characteristic information that is unique to the present embodiment. Accordingly, the contents of the program information, which is generated from the resource usage information, are also different from Embodiment 1 or 2.

Now, the resource usage information in the present embodiment will be described.

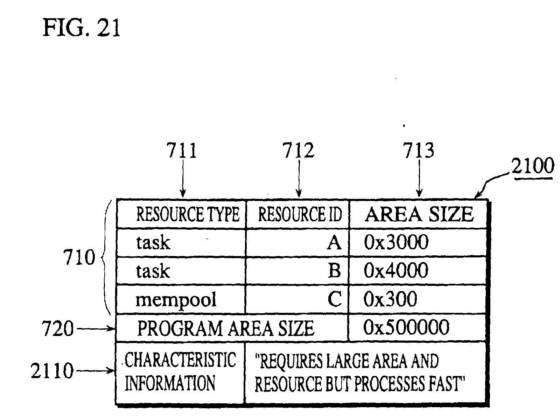

FIG. 21 shows an example of the construction and contents of resource usage information 2100 in the present eembodiment (in the case of a program corresponding to storage ID "x3").

The resource usage information 2100 is almost the same as the resource usage information 1803 in Embodiment 2 (see FIG. 18C) except that it additionally includes a characteristic information field 2110 that contains text data describing the characteristics of the program. The characteristics (the size of areas, processing speed, etc.) described in the characteristic information are obtained by comparing the programs in a set corresponding to the same program request ID, with each other. The example shown in FIG. 21 provides the characteristic of program x3 obtained by comparing the program x3 with the programs x1 and x2.

Now, the operation of each component will be described.

The selecting unit 313 operates in the same way as the selecting unit 213 in Embodiment 2 until it judges, from the receiving apparatus information 500 transmitted from the receiving apparatus 320 and the resource usage information for the program, whether the program can be executed by the receiving apparatus 320.

The operation after the selecting unit judges that a plurality of programs can be executed differs between the present embodiment and Embodiment 2. That is to say, in Embodiment 2, the selecting unit 213 selects one among the executable plurality of programs, while in Embodiment 3, the selecting unit 313 operates to transmit all the executable programs to the receiving apparatus 320. More specifically, the selecting unit 313 generates the rewriting information (see FIG. 9) and the program information for each program, and outputs the allocation information and the program information to the rewriting unit 314 and the program transmitting unit 315, respectively. The program information in the present embodiment differs from the program information 1000 in Embodiments 1 and 2 in that it additionally includes the contents of the characteristic information 2110 contained in the resource usage information 2200.

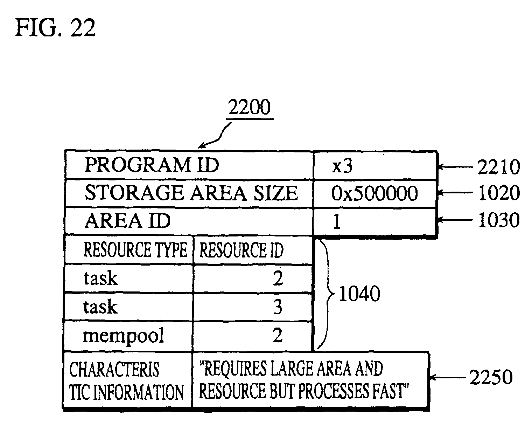

FIG. 22 shows an example of the construction and contents of the program information 2200 in the present embodiment (in the case of the program x3, as in FIG. 21). The common portions with the program information in Embodiments 1 and 2 (see FIG. 10) are assigned the same reference numbers and are not detailed here. One of the unique points of the program information 2200 in the present embodiment is that it additionally has a characteristic information field 2250 for containing the characteristic information. Another unique point is that the program ID field 2210 contains a "storage ID", not a "request ID".

When receiving a plurality of pieces of program information for a plurality of programs from the selecting unit 313 (when the selecting unit 313 selects a plurality of programs), the program transmitting unit 315 first transmits all the pieces of program information to the receiving apparatus 320, then waits for an identification (storage ID) of a program selected by the user to be transmitted from the receiving apparatus 320.

When receiving the storage ID from the receiving apparatus 320, the program transmitting unit 315 transmits a program that corresponds to the received storage ID, among a plurality of rewritten programs output from the rewriting unit 14, to the receiving apparatus 320 together with the related piece of system request information.

When the selecting unit 313 selects only one or no program that can be executed by the receiving apparatus 320, the succeeding actions by the program transmitting unit 315 are the same as those of the program transmitting unit in Embodiments 1 and 2.

### Construction of Receiving Apparatus 320

The construction of the receiving apparatus 320 will be described. The same components as those in the receiving apparatus in Embodiment 1 or 2 are assigned with the same reference numbers and will not be detailed here. The process unique to the present embodiment is performed after the transmitting apparatus 310 starts downloading a program to the receiving apparatus, and is performed by the interface unit 321 and the program receiving unit 324.

When receiving a plurality of pieces of program information from the transmitting apparatus 310, the program receiving unit 324 temporarily stores the program information, and outputs the program information for each program to the interface unit 321, instructing it to receive from the user an indication of a program selected by the user.

When receiving the identification of a user-selected program, the program receiving unit 324 sends to the transmitting apparatus 310 the storage ID of a program that corresponds to the received identification, and waits for the program corresponding to the storage ID to be transmitted from the transmitting apparatus 310. When receiving the program from the transmitting apparatus 310, the program receiving unit 324 stores the program in the program storage area, and outputs the program information and the system request information to the resource allocating unit 25 and the system request issuing unit 26, respectively.

When receiving only one program or a message "program transmission not available" from the transmitting apparatus 310, the succeeding actions of the program receiving unit 324 are the same as those in Embodiments 1 and 2.

The interface unit 321 allows the user to select one among a plurality of download candidate programs, as well as performing in the same way as in Embodiments 1 and 2 (receiving a download request from the user).

When instructed by the program receiving unit 324 to receive from the user an indication of a program selected by the user, the interface unit 321 generates, based on the characteristic information received together with each program and storage IDs, a program selection screen (GUI) for receiving an indication of a selected program from the user, and displays the generated screen.

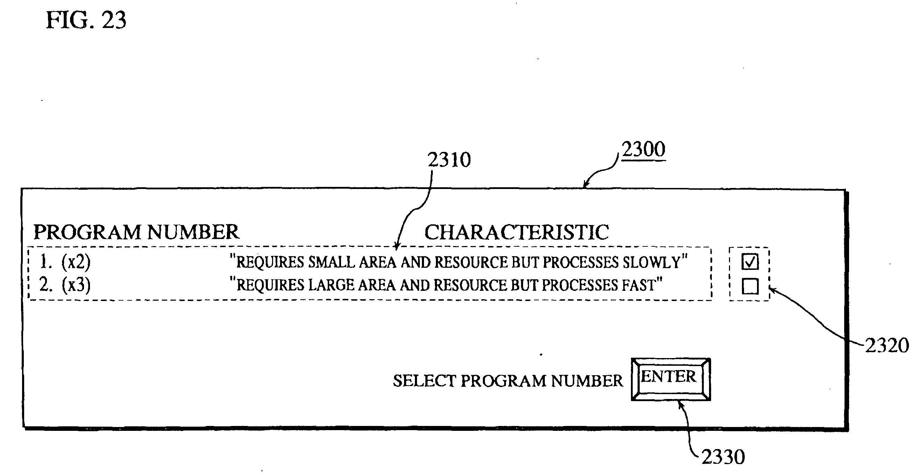

FIG. 23 shows a program selection screen 2300 displayed on a display of the receiving apparatus 320 by the interface unit 321 (in the case of programs x2 and x3). The program selection screen 2300 includes an information display field 2310 for displaying the contents of the program information for each program, checkboxes 2320 to be placed with a check mark by the user to indicate a selected program, and an enter button 2330 to be depressed by the user to confirm the entry of the program selection.

The information display field 2310 displays the contents of the characteristic information contained in the program information output from the program receiving unit 324 to the interface unit 321.

After the user places a check mark in a checkbox 2320 for a certain program and clicks the enter button 2330 on the program selection screen 2300, the interface unit 321 sends the identification (storage ID) of the selected program to the program receiving unit 324.

After the program receiving unit 324 receives the program, the resource allocating unit 25 and the system request generating unit 26 operate in the same way as in Embodiments 1 and 2.

### Conclusion

As described above, in the download system 3 in the present embodiment, when the transmitting apparatus 310 holds a plurality of download candidate programs for a request received from the receiving apparatus 320, the transmitting apparatus 310 transmits the characteristic information to the receiving apparatus 320 so that the user can select a program based on the characteristic information. With this construction, the download system 3 in the present embodiment can select a program at the user' s wish, as well as achieving the effects of Embodiment 2.

### Embodiment 4

In Embodiment 4, the judgment on whether a program can be executed by a receiving apparatus is made by the receiving apparatus, while in Embodiments 1 to 3, it is made by a transmitting apparatus. The judgment is made prior to the program download, based on the results of a provisional execution of a script for resource allocation (hereinafter referred to as resource script) held by the transmitting apparatus. In contrast, in Embodiments 1 to 3, the judgment is made based on (a) the resource usage information held by the transmitting apparatus and (b) the receiving apparatus information generated by the receiving apparatus. The present embodiment will be described in more details with reference to the attached drawings.

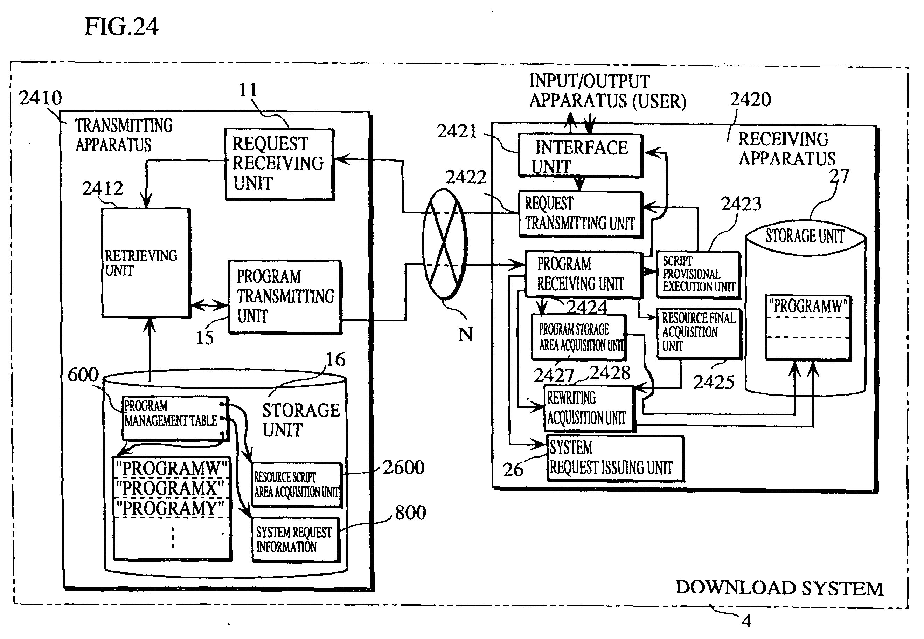

FIG. 24 shows a download system 4 in the present embodiment. The same components as those of the download system 1 in Embodiment 1 are assigned with the same reference numbers.

The construction of the present embodiment is characterized as follows. The transmitting apparatus 2410 does not have components for making the judgment, nor the resource usage information. The receiving apparatus 2420 does not have components generating the receiving apparatus information, but includes a script provisional execution unit 2423.

Prior to the description of the construction, an outline of the download process performed by the download system 4 in the present embodiment will be described.

### Outline of Download Process

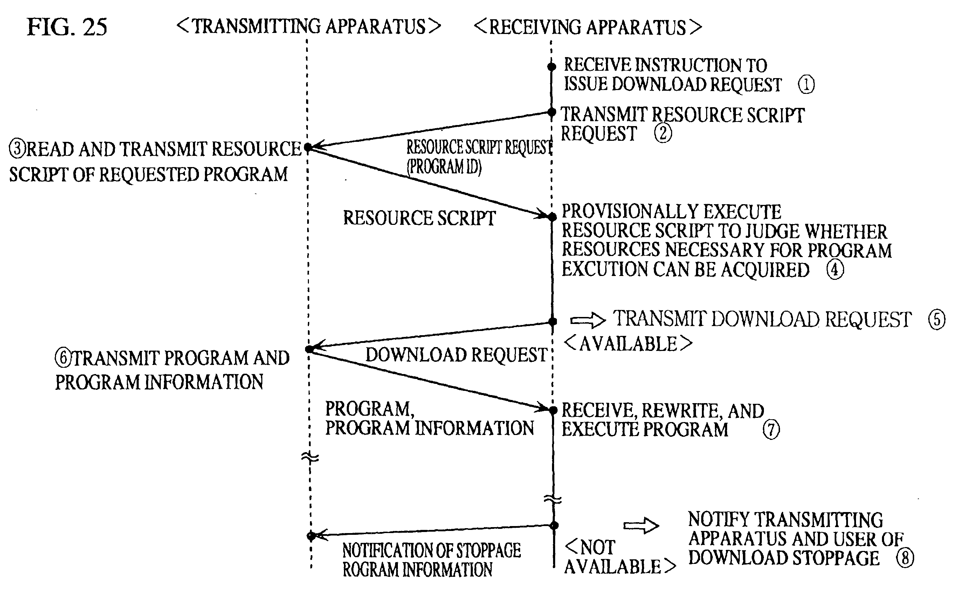

FIG. 25 is a sequence diagram showing the procedure of the download process and the flow of information in the download process.

The process starts as a user requests the receiving apparatus 2420 to issue a program download request (①). The receiving apparatus 2420 transmits a resource script request (including a program ID) that requests the transmitting apparatus 2410 to transmit a resource script concerning the program (②).

After receiving the resource script request from the receiving apparatus 2420, the transmitting apparatus 2410 reads a resource script corresponding to a download target program, and transmits the read resource script to the receiving apparatus 2420 (③).

The receiving apparatus 2420 provisionally executes the resource script to judge whether the resources necessary for the program execution can be allocated (④).

When it judges that the resources can be allocated, the receiving apparatus 2420 transmits a program download request to the transmitting apparatus 2410 (⑤). When a program is downloaded from the transmitting apparatus 2410 in response to the download request (⑥), the receiving apparatus 2420 receives and stores the program, allocates the necessary resources, and executes the program by issuing a system request (⑦).

When it judges that the resources cannot be allocated as a result of the provisional execution of the resource script in ④, the receiving apparatus 2420 notifies the transmitting apparatus 2410 of a cancellation of the request transmitted in ①, and also notifies the user of "download not available".

### Construction

Now, the construction of the download system 4 in the present embodiment will be described.

### Construction of Transmitting Apparatus 2410

The construction of the transmitting apparatus 2410 is as follows. The transmitting apparatus 2410 does not include the judging unit 13 and the rewriting unit 14, which are included in the transmitting apparatus 10 in Embodiment 1. Also, the storage unit 16 stores resource scripts 2600 instead of the resource usage information 700 in Embodiment 1.

The reason for the above construction is that as described earlier, the process that should be performed by the judging unit 13 and the rewriting unit 14 in Embodiment 1 is performed by the receiving apparatus 2420 in the present embodiment and that the judgment on whether the resources necessary for the program execution can be allocated or not is made by performing a provisional execution of the resource script in the present embodiment.

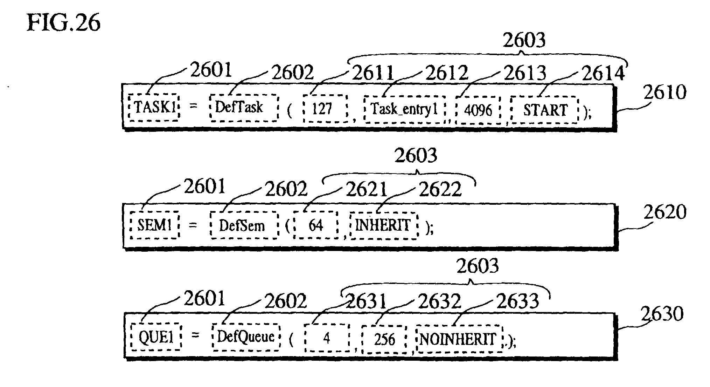

FIG. 26 shows a specific example of the resource script 2600 stored in the storage unit 16 of the transmitting apparatus 2410 in the present embodiment.

In the present embodiment, resource scripts are provided instead of the resource usage information in Embodiment 1, and the resource scripts correspond to the download programs, as is the case with the resource usage information in Embodiment 1. More specifically, the correspondence between the resource scripts and the download programs is set in the program management table (see FIG. 6), where a resource script address field is set instead of the resource usage information address field 603.

The resource scripts shown in FIG. 26 are used to allocate resources necessary for executing download programs. Each resource script is composed of a task script 2610 for acquiring resources necessary for executing a task, a semaphore script 2620 for acquiring resources for a counting semaphore, and a message queue script 2630 for acquiring resources for a message queue.

Each of the scripts 2610 to 2630 is composed of: a resource name field 2601 in which an identification of a resource to be acquired (corresponding to the resource type 711 and resource ID 712 in the resource usage information 700 (see FIG. 7)) is set; a function field 2602 in which a script function is set; and a parameter field 2603 in which characteristics concerning the resource to be acquired are set.

The task script 2610 instructs to acquire a task execution resource by executing a script function "DefTask" and put a name "TASK1" to the acquired resource. The parameter field 2603 in the task script 2610 contains: a parameter 2611 specifying an execution priority level of an acquired task (identified as "TASK1"); a parameter 2612 specifying an entry point; a parameter 2613 specifying a stack size (corresponding to the area size 713 in the resource usage information 700 (see FIG. 7)); and a parameter 2614 specifying the execution state at an activation.

The semaphore script 2620 instructs to acquire a counting semaphore resource by executing a script function "DefSem" and put a name "SEM1" to the acquired resource. The parameter field 2603 in the semaphore script 2620 contains: a parameter 2621 specifying an initial value; and a parameter 2622 specifying whether to execute a priority level succession if a wait state occurs during the acquisition process.

The message queue script 2630 instructs to acquire a message queue resource by executing a script function "DefQueue" and put a name "QUE1" to the acquired resource. The parameter field 2603 in the message queue script 2630 contains: a parameter 2631 specifying the size of a message that is handled by the acquired message queue (resource name: "QUE1"); a parameter 2632 specifying the number of messages; and a parameter 2633 specifying whether to execute a priority level succession if a wait state occurs during the acquisition process.

Since the present embodiment does not include the judging unit 13 and the rewriting unit 14, the retrieving unit 2412 operates in a different way from the retrieving unit 12 in Embodiment 1.

More specifically, the retrieving unit 2412 receives a resource script request from the receiving apparatus 2420 via the request receiving unit 11, searches the program management table 600 for an address of a resource script corresponding to the program, on a key that is the program ID added to the request, reads the resource script from a location at the obtained address, and sends the read resource script to the program transmitting unit 15 with an instruction to send the resource script to the receiving apparatus 2420. When receiving a program request from the receiving apparatus 2420 in response to this, the program retrieving unit 2412 reads, from the storage unit 16, (a) a download program corresponding to an identification contained in the request and (b) a piece of system request information corresponding to the program, and sends the read program and system request information to the program transmitting unit 15 with an instruction to transmit them to the receiving apparatus 2420.

### Construction of Receiving Apparatus 2420

The receiving apparatus 2420 includes a rewriting unit 2428 which corresponds to the rewriting unit 14 contained in the transmitting apparatus 10 in Embodiment 1, and the script provisional execution unit 2423 which corresponds to the judging unit 13 in Embodiment 1. The receiving apparatus 2420 also includes a program storage area acquisition unit 2427 and a resource final acquisition unit 2425 instead of the resource allocating unit 25 in Embodiment 1. In the present embodiment, the resource apparatus information generating unit 22 in Embodiment 1 is not necessary. Instead, the interface unit 2421, the request transmitting unit 2422, and the program receiving unit 2424 perform the processes unique to the present embodiment.

The interface unit 2421 receives from the user an instruction to issue a download request, and sends the received instruction to the request transmitting unit 2422.

The request transmitting unit 2422 transmits a script request to the transmitting apparatus 2410 together with the program identification contained in the instruction. The program receiving unit 2424 receives one or more resource scripts transmitted from the transmitting apparatus 2410 in response to the script request. The program receiving unit 2424 sends the received resource scripts to the script provisional execution unit 2423. The script provisional execution unit 2423 performs a provisional execution for each of the received resource scripts. When each result of the provisional executions for the resource scripts is "resource acquisition available", the request transmitting unit 2422 transmits a program download request to the transmitting apparatus 2410; and when at least one of the results of the provisional executions is "resource acquisition not available", the request transmitting unit 2422 notifies the transmitting apparatus 2410 of a cancellation of the download process.

The script provisional execution unit 2423 performs a provisional execution for each of the resource scripts received from the program receiving unit 2424 to judge whether the download program requested by the user can be executed (whether the resources necessary for the execution can be acquired). When it is judged as "resource acquisition available", the script provisional execution unit 2423 declares the use of the resources for the execution in the system of the receiving apparatus 2420 so that the resources are not used by other programs. More specifically, the script provisional execution unit 2423 sets "USED" in the use state field 330 in the resource management information (see FIG. 3) concerning the resources, and in the use state field 430 in the storage area management information (see FIG. 4) concerning the program storage area. The script provisional execution unit 2423 then sends the identifications of the resources declared to be used to the resource final acquisition unit 2425, and the identification of the program storage area as well as the identification of the program to the program storage area acquisition unit 2427.

The script provisional execution unit 2423 notifies the request receiving unit 2422 of a judgment result ("resource acquisition available" or "resource acquisition not available").

The program receiving unit 2424 receives a download program and a piece of system request information corresponding to the program from the transmitting apparatus 2410, and performs the following processes. First, at the start of receiving the program, the program receiving unit 2424 sends the identification of the program to the resource final acquisition unit 2425 and the program storage area acquisition unit 2427, formally instructing them to allocate the resources having been declared to be used and the program storage area for the execution of the program. The program receiving unit 2424 then waits for a notification of having allocated the program storage area from the program storage area acquisition unit 2427. When receiving the notification with the address of the area, the program receiving unit 2424 stores the program into the area. As is the case with the program receiving unit 24 in Embodiment 1, the program receiving unit 2424 sends the system request information to the system request issuing unit 26. When the program storage is completed, the program receiving unit 2424 notifies the rewriting unit 2428 of it.

The resource final acquisition unit 2425 allocates the resources, the use of which has been declared by the script provisional execution unit 2423 as a result of the provisional executions of scripts, to the execution of the download program. The resource final acquisition unit 2425 also generates a resource information table from information relating to the allocated resources (resource information), and sends the table to the rewriting unit 2428, with an instruction to rewrite the download program.

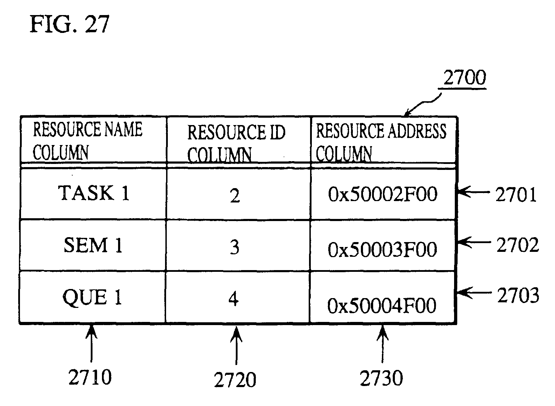

FIG. 27 shows an example of the construction and contents of a resource information table 2700 generated by the resource final acquisition unit 2425.

The resource information table 2700 is composed of a resource name field 2710, a resource ID field 2720, and a resource address field 2730. The resource name field 2710 contains resource names that are assigned to the resources as a result of the executions of the resource scripts (see FIG. 26). The resource ID field 2720 contains identifications (corresponding to the values in the resource ID field 320 of the resource management table 300 in Embodiment 1) of the resources that have been actually acquired by the resource final acquisition unit 2425. The resource address field 2730 contains the addresses in the storage unit 27 of the resources that have been actually acquired by the resource final acquisition unit 2425. Note that the values set in the resource name field 2710 correspond to the resource IDs held by the transmitting apparatus in Embodiment 1 (see FIGs. 7 and 9).

A piece of resource information 2701 corresponds to the task resource which is acquired by the execution of the task script 2610 shown in FIG. 26. The resource information 2701 indicates that the receiving apparatus 2420 has allocated a resource with identification "2" as the resource that is identified as "TASK1" in the task script 2610. Similarly, the resource information 2702 and 2703 indicate that the receiving apparatus 2420 has allocated resources with identifications "3" and "4" as the resources that are identified as "SEM1" and "QUE1" in the semaphore script 2620 and the message queue script 2630, respectively.

When receiving an instruction to rewrite the program from the resource final acquisition unit 2425, the rewriting unit 2428 waits for a notification from the program receiving unit 2424 that it has received and stored the download program, together with the address of the storage area storing the program. When receiving an instruction to rewrite the program, the rewriting unit 2428 replaces a resource name in the downloaded and stored program with the resource ID of the resource acquired by the resource final acquisition unit 2425, in accordance with the contents of the resource information table 2700 which is received with the rewriting instruction.

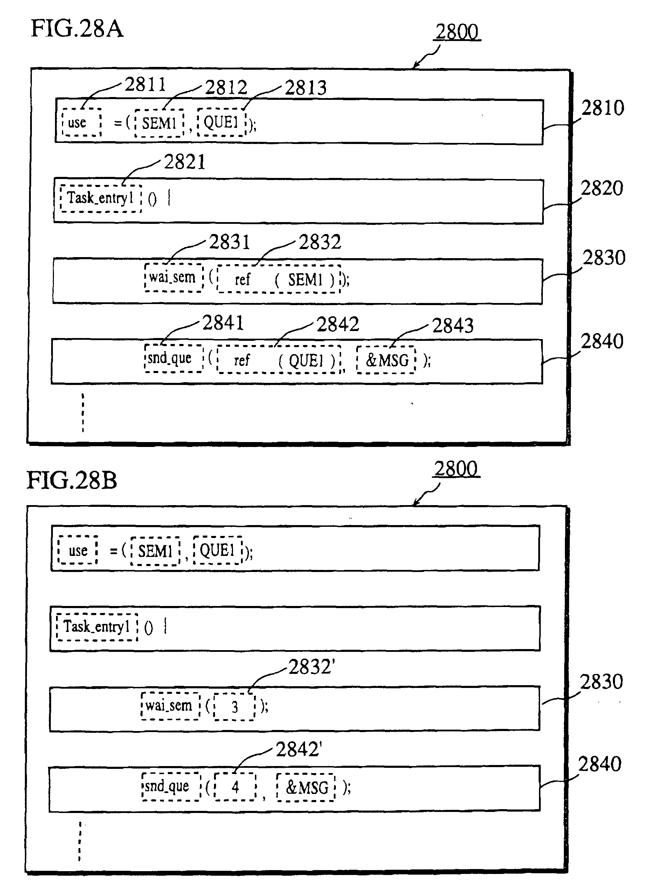

FIGs. 28A and 28B specifically show how a download program is rewritten by the rewriting unit 2428.

FIG. 28A shows an excerpt from a portion concerning resources in a download program 2800 having been received by the program receiving unit 2424, before a rewriting.

The statement 2810 declares the name of a resource to be used. This resource name corresponds to the resource name specified in the resource name field 2601 in the resource script. The "use" function 2811 is a function used to declare the name of the resource to be used. The parameter fields 2812 and 2813 specify the resource names. In this example, semaphore resource name "SEM1" and message queue resource name "QUE1", the same names as are shown in FIG. 26, are specified.

The statement 2820 defines the task entry of a task that corresponds to the task resource script 2610 shown in FIG. 26. The "Task_entry" function 2821 indicates the entry point of the task.

The statement 2830 indicates the use of the counting semaphore. The "wai_sem" function 2831 indicates a system call to wait for an acquisition of the counting semaphore. The "ref" function 2832 is a function used to acquire the identification of a resource used in the program execution. In this example, the resource name "SEM1" specified in the semaphore script 2620 is specified so as to acquire the identification of a resource that is obtained by executing the semaphore script 2620.

The statement 2840 indicates the use of amessage queue. The "snd_que" function 2841 indicates a system call for transmitting the message queue. The "ref" function 2842 is a function used to acquire the identification of a resource used in the program execution. In this example, the resource name "QUE1" specified in the message queue script 2630 is specified so as to acquire the identification of a resource that is obtained by executing the message queue script 2630. The parameter 2843 specifies a variable concerning the message transmitted by the "snd_que" function 2841.

FIG. 28B shows the download program 2800 after the rewriting.

It is found by reviewing the drawing that the "ref" functions 2832 and 2842 in the statements 2830 and 2840 shown in FIG. 28A have been rewritten to the identifications 2832' and 2842' of the actually acquired resources by the receiving apparatus 2420. The rewriting has been done in accordance with the contents of the resource information 2702 and 2703 shown in FIG. 27.

### Operation

The operation of the download process in the present embodiment will be described for each of the receiving apparatus 2420 and the transmitting apparatus 2410.

### Operation of Receiving Apparatus 2420

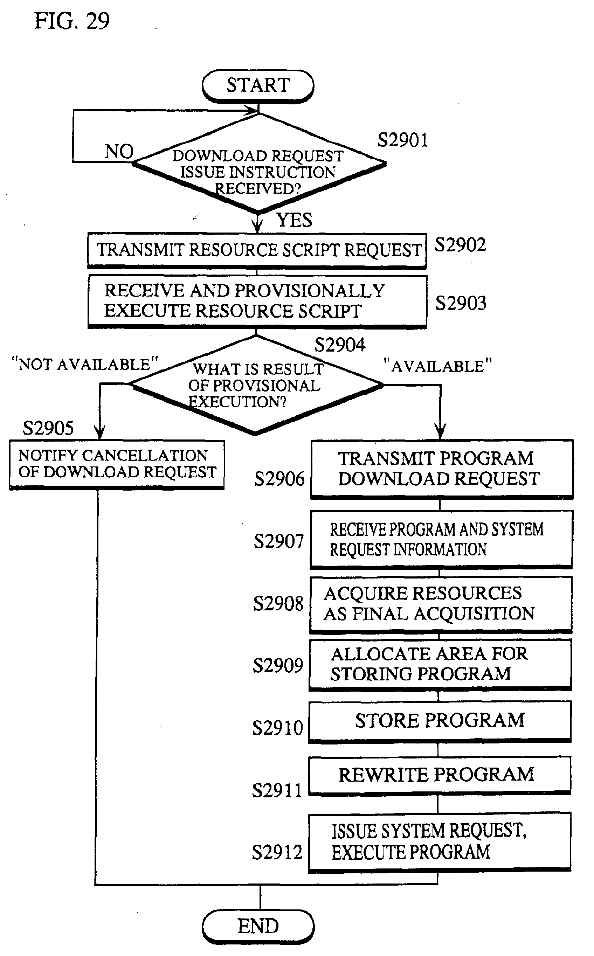

FIG. 29 is a flowchart showing the procedure of the download process performed by the receiving apparatus 2420.

The download process in the receiving apparatus 2420 starts as the interface unit 2421 receives from the user an instruction to issue a download request (judged as YES in S2901).

Receiving the contents of the instruction from the interface unit 2421, the request transmitting unit 2422 transmits a resource script request to the transmitting apparatus 2410 together with an identification of the download-target program indicated in the instruction (S2902).

The program receiving unit 2424 receives one or more resource scripts transmitted from the transmitting apparatus 2410 in response to the script request. The program receiving unit 2424 sends the received resource scripts to the script provisional execution unit 2423. The script provisional execution unit 2423 performs a provisional execution for each of the received resource scripts to judge whether the resources necessary for the execution of the program can be acquired, and notifies the judgment result to the request transmitting unit 2422 (S2903).

When the judgment result is "resource acquisition not available" (judged as "NOT AVAILABLE" in S2904), the request transmitting unit 2422 notifies the transmitting apparatus 2410 of a cancellation of the download process, and notifies the user that the download is not available (S2905). When the judgment result is "resource acquisition available" (judged as "AVAILABLE" in S2904), the request transmitting unit 2422 transmits a program download request to the transmitting apparatus 2410 (S2906).

The program receiving unit 2424 receives a download program and a piece of system request information corresponding to the program which are sent from the transmitting apparatus 2410 in response to the download request (S2907).

The program receiving unit 2424 formally instructs the resource final acquisition unit 2425 to allocate the resources having been temporarily acquired by the script provisional execution unit 2423 (S2908). The program receiving unit 2424 also instructs the program storage area acquisition unit 2427 to acquire an area for storing the download program (S2909).

After the area for storing the download program is acquired, the program receiving unit 2424 stores the received program in the area (S2910), and notifies the rewriting unit 2428 of a completion of the storage. Upon being notified of the storage completion, the rewriting unit 2428 rewrites the stored program as shown in FIG. 28 (S2911).

The process after this is the same as Embodiment 1. That is, after the program is rewritten by the rewriting unit 2428, the program receiving unit 2424 outputs the system request information to the system request issuing unit 26, instructing it to issue the system request. The system request issuing unit 26 issues the system request (requesting the system to restart the system and execute theprogramx) (S2912). This allows the receiving apparatus 2420 to execute the downloaded program.

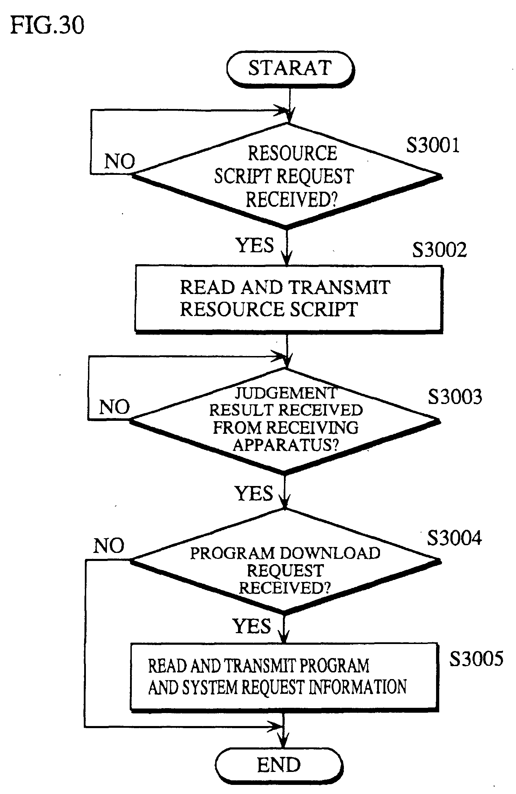

FIG. 30 is a flowchart showing the procedure of the download process performed by the transmitting apparatus 2410.

The download process in the transmitting apparatus 2410 starts as the request receiving unit 11 receives a resource script request from the receiving apparatus 2420 (judged as YES in S3001). The program retrieving unit 2412 reads from the storage unit 16 a resource script that corresponds to the program identification attached to the resource script request, and sends the resource script to the program transmitting unit 15, which then transmits the resource script to the receiving apparatus 2420 (S3002).

The request receiving unit 11 then waits for and receives a response from the receiving apparatus 2420 in accordance with the result of a provisional execution of the resource script (judged as YES in S3003). When the request receiving unit 11 receives a program download request (judged as YES in S3004), the retrieving unit 2412 reads, from the storage unit 16, a download program corresponding to an identification attached to the download request, and the read-out program and a corresponding piece of system request information are sent to the receiving apparatus 2420 by the program transmitting unit 15 (S3005).

### Conclusion

As described above, the download system 4 in the present embodiment judges whether a program can be downloaded to the receiving apparatus 2420, based on the results of a provisional execution of a resource script that the receiving apparatus 2420 receives from the transmitting apparatus. Such a construction prevents a not-executable program from being downloaded, and reduces the load on the transmitting apparatus per download process. As a result, even if the transmitting apparatus receives a plurality of download requests during a short period of time, the download requests can relatively be processed without delay. Also, since the provisional execution of a resource script includes the resource allocation process required in the program execution, the present embodiment reduces the load on the judgment process compared with the system of Embodiments 1 to 3 in which the judgment is made by generating the receiving apparatus information and comparing this with the resource usage information. As a result, the time required for the download process is reduced.

### Embodiment 5

The download system in the present embodiment checks the devices and programs by executing a check script transmitted from the transmitting apparatus to the receiving apparatus.

In the earlier embodiments, the judgment on whether a download program can be executed is made based on whether a program storage area or resources (for task, memory pool, semaphore, and message queue) are available. However, there are other conditions that should be satisfied when it is determined that the receiving apparatus can execute the download program. For example, the judgment may be made based on whether the receiving apparatus has certain functions, such as (a) a certain device (e.g., a communication modem) and its performance and (b) an embedded (installed) program (e.g., a character conversion program) and its function.

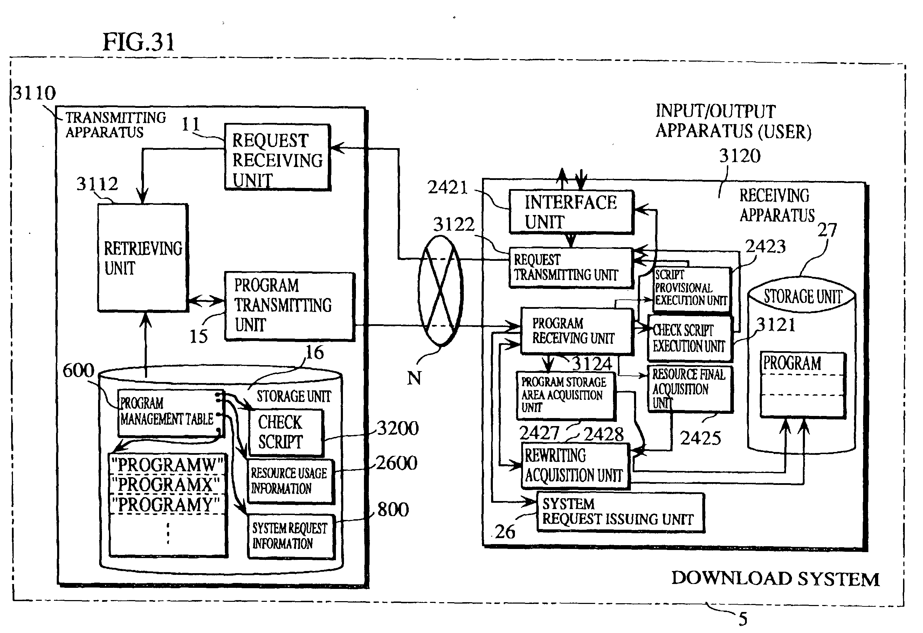

FIG. 31 is a block diagram showing the construction of a download system 5 in the present embodiment. The same components as those in the download system in Embodiment 4 are assigned with the same reference numbers and they are not detailed here.

### Construction

The construction of the download system 5 in the present embodiment will be described. The same components as those in the download system in Embodiment 4 are assigned with the same reference numbers and they are not detailed here.

### Construction of Transmitting Apparatus 3110

The transmitting apparatus 3110 includes a retrieving unit 3112 that performs a process unique to the present embodiment. Also, the storage unit 16 stores check scripts corresponding to download programs. The correspondence between the check scripts and download programs is defined in the program management table 600, as is the case with the resource scripts and the system request information.

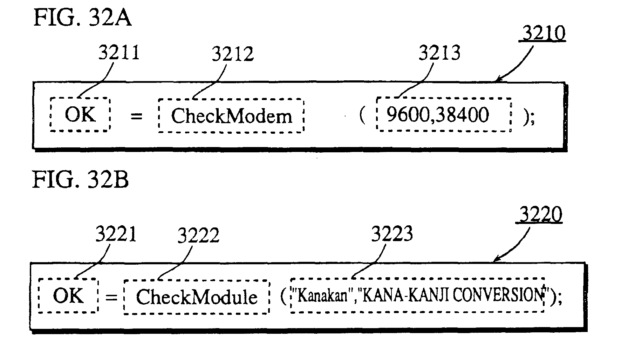

FIGs. 32A and 32B show examples of check scripts used in determining whether a program can be downloaded, or executed by the receiving apparatus in the present embodiment.

FIG. 32A shows a device check script 3210 which is used to check the function of a modem (not illustrated) included in the receiving apparatus 3120.

The device check script 3210 is composed of a result field 3211 and a function field (a portion starting with "CheckModem").

The result field 3211 specifies a value that is expected to be output as a result of executing the function. The value "OK" specified in this example shows that the expected result is "normal". In the function field, a script function name 3212 specifies a check target. The characters "CheckModem" shown in this example indicates that the target is amodem. A condition field 3213 specifies an expected function of the modem as a precondition for executing the download program. In this example, values "9600" and "38400" are specified as the lowest baud rate and the highest baud rate, respectively. When a modem contained in the receiving apparatus 3120 satisfies the condition "the lowest baud rate = 9600 & the highest baud rate = 38400" specified in the condition field 3213, the execution result of the function "CheckModem" is "OK", and the script normally ends. On the contrary, when the modem does not satisfy the condition, the script ends abnormally.

FIG. 32B shows a program check script 3220 which is used to check whether a character conversion program has a Kana-Kanji conversion function.

A result field 3211 specifies a value that is expected to be output as a result of executing the function field (a portion starting with "CheckModule"). The value "OK" specified in this example shows that the expected result is "normal". In the function field, a script function name 3222 specifies a check target. The characters "CheckModule" shown in this example indicates that the target is a program. A condition field 3223 specifies an expected function of the check-target program as a precondition for executing the download program. In this example, the field includes (a) a program idenifier "Kanakan" indicating a check-target program and (b) a functional parameter "Kana-Kanji conversion" indicating an expected function. When the receiving apparatus 3120 satisfies the condition "the program with identifier 'Kanakan' has the 'Kana-Kanji conversion function'", the execution result of the function "CheckModule" is "OK", and the script normally ends. On the contrary, when the receiving apparatus does not satisfy the condition, the script ends abnormally.

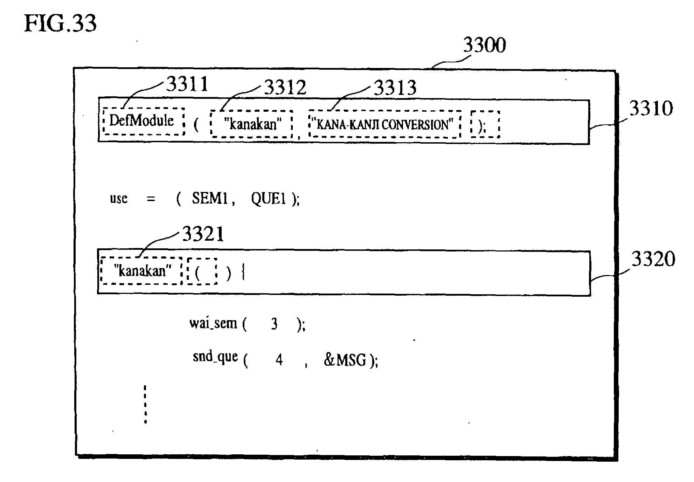

FIG. 33 shows an example of a check-target program corresponding to the check script shown in FIG. 32B. The program is written in the programming language "C", and only a part of it is shown in FIG. 33.

A statement 3310 declares a function of a check-target program. A "DefModule" function 3311 declares the name and function of the program. A parameter 3312 specifies the name of the program. A parameter 3313 indicates a function of the program.

### Construction of Receiving Apparatus 3120

The receiving apparatus 3120 includes a check script execution unit 3121 that performs a process unique to the present embodiment. With the addition of the check script execution unit 3121, the request transmitting unit 3122 and the program receiving unit 3124 also perform processes unique to the present embodiment.

The program receiving unit 3124 receives a resource script and a check script which are sent from the transmitting apparatus 3110 in response to a resource script request sent from the receiving apparatus 3120. The program receiving unit 3124 then sends the received resource script and check script to the script provisional execution unit 2423 and the check script execution unit 3121, respectively.

The check script execution unit 3121 executes the check script and outputs the execution result (a normal end or an abnormal end) to the request transmitting unit 3122.

The request transmitting unit 3122 transmits either a program download request or a notification of a download cancellation to the transmitting apparatus 3110, in accordance with the check script execution result received from the check script execution unit 3121. The request transmitting unit 2422 in Embodiment 4 transmits a program download request when all the executions of the resource scripts end normally. In the present embodiment, the request transmitting unit 3122 transmits a program download request when all the executions of the resource scripts and the check scripts end normally.

### Operation

The operation of the download system 5 in the present embodiment will not be described here since it is almost the same as that of the download system 4 in Embodiment 4.

### Conclusion

As described above, the download system 5 in the present embodiment can download a program to the receiving apparatus after confirming that the receiving apparatus clears various conditions such as a condition concerning a certain device and its performance and a condition concerning a program and its function. This prevents a wasteful downloading of a program that cannot be executed unless certain condition concerning a device or program are satisfied, as well as the condition that certain resources are allocated. Also, since the judgment is made by the receiving apparatus by executing scripts sent from the transmitting apparatus, there is no need for the receiving apparatus to collect and transmit information concerning the device and program, in the form of, for example, the receiving apparatus information.

The judgment based on the execution result of check scripts on whether a program can be downloaded, which is a characteristic of the present embodiment, can be applied to each of Embodiments 1 to 4. Also, the checks on certain devices and programs may be done by executing other than check scripts. For example, the transmitting apparatus may hold "information on necessary devices" or "information on necessary programs" and transmit these information to the receiving apparatus so that the receiving apparatus can judge whether it can download a program by comparing these information with the construction information held by the receiving apparatus.

Although the present invention has been fully described by way of examples with reference to the accompanying drawings, it is to be noted that various changes and modifications will be apparent to those skilled in the art. Therefore, unless such changes and modifications depart from the scope of the present invention, they should be construed as being included therein.

In the above Embodiments 1 to 3, the download system is composed of a CATV broadcasting station and set top boxes at the receiving ends. This construction is only an example. Many other variations are possible. For example, a server at a service provider may transmit a program for online shopping or a TV game to terminals such as set top boxes set at home of the subscribers. Also, data or programs may be transferred between the transmitting apparatus and the receiving apparatuses via radio communications.

It should be noted here that though in Embodiments 1 to 3, the download of a program always starts with a request from the receiving apparatus, the transmitting apparatus may start a program download without a request from the receiving apparatus in such cases as (a) a version-up service for an already downloaded program and (b) an additional downloading of a new program for a functional extension. In this case, the download process starts as the transmitting apparatus requests the receiving apparatus to generate and transmit the receiving apparatus information. After receiving the receiving apparatus information, the transmitting apparatus operates in the same way as in Embodiments 1 to 3.

The above-described five embodiments maybe combined in various ways so as not to generate a contradiction. For example, the transmitting apparatus in Embodiment 1 or 3 may perform the check on the devices andprograms as performed in Embodiment 5. In this case, the receiving apparatus transmits information concerning the devices and programs to the transmitting apparatus as an attachment to the receiving apparatus information. Also, the transmitting apparatus in Embodiment 4 or 5 may prepare a plurality of programs that achieve the same function, as in Embodiments 2 and 3. In this case, the receiving apparatus receives, in response to a download request, resource scripts and check scripts for a plurality of programs, provisionally or formally executes the scripts, and determines an executable program to be downloaded, based on the results of the executions of the scripts.

## Claims

1. A download system including (a) a receiving apparatus for receiving and executing a program and (b) a transmitting apparatus for transmitting the program to the receiving apparatus,
the receiving apparatus comprising:
information generating means for generating receiving apparatus information that indicates a use state of resources held by the receiving apparatus that are necessary for program executions;
request transmitting means for transmitting to the transmitting apparatus a download request which contains (a) an identification of a download-target program and (b) the generated receiving apparatus information; and
program receiving means for receiving a program that is sent from the transmitting apparatus in response to the download request, and
the transmitting apparatus comprising:
program holding means for holding one or more programs and identifications thereof;
resource information holding means for holding one or more pieces of resource information which correspond to the one or more programs on a one-to-one basis and each indicate resources necessary for an execution of a corresponding program;
request receiving means for receiving the download request from the receiving apparatus;
judging means for judging, from (a) apiece of resource information corresponding to one of the one or more programs with the identification contained in the download request and (b) the receiving apparatus information contained in the download request, whether the receiving apparatus can execute the program with the identification; and
program transmitting means for transmitting to the receiving apparatus the program with the identification when the judging means judges that the receiving apparatus can execute the program.

2. A download system including (a) a receiving apparatus for receiving and executing a program and (b) a transmitting apparatus for transmitting the program to the receiving apparatus,
the receiving apparatus comprising:
information generating means for generating receiving apparatus information that indicates a use state of resources held by the receiving apparatus that are necessary for program executions;
request transmitting means for transmitting to the transmitting apparatus a download request which contains (a) an identification of a download-target program and (b) the generated receiving apparatus information; and
program receiving means for receiving a program that is sent from the transmitting apparatus in response to the download request, and
the transmitting apparatus comprising:
program holding means for holding a plurality of programs and identifications thereof, the plurality of programs achieving basically the same function and requiring resources that satisfy different conditions;
resource information holding means for holding a plurality of pieces of resource information which correspond to the plurality of programs on a one-to-one basis and each indicate resources necessary for an execution of a corresponding program;
request receiving means for receiving the download request from the receiving apparatus;
judging means for judging, from (a) two or more pieces of resource information corresponding to two or more programs that have the identification contained in the download request, among the plurality of programs and (b) the receiving apparatus information contained in the download request, whether the receiving apparatus can execute the two or more programs; and
program transmitting means for transmitting to the receiving apparatus a program that the judging means judges the receiving apparatus can execute.

3. The download system of Claim 2, wherein
when judging that the receiving apparatus can execute any of at least two programs among the two or more programs, the judging means selects one out of the at least two programs, and
the program transmitting means transmits the selected program to the receiving apparatus.

4. The download system of Claim 2, wherein
when the judging means judges that the receiving apparatus can execute any of at least two programs among the two or more programs, the program transmitting means transmits to the receiving apparatus at least two pieces of characteristic information that each indicate characteristics at an execution of a corresponding one of the at least two programs, receives a selection result which is sent from the receiving apparatus in response to the at least two pieces of characteristic information, and transmits a program corresponding to the selection result to the receiving apparatus, and
the receiving apparatus further comprising:
selection receiving means for presenting to a user the at least two pieces of characteristic information received from the program transmitting means, allowing the user to select one among the at least two pieces of characteristic information, and receiving a selection result from the user; and
selection result notifying means for notifying the transmitting apparatus of the selection result.

5. A download system including (a) a receiving apparatus for receiving and executing a program and (b) a transmitting apparatus for transmitting the program to the receiving apparatus,
the transmitting apparatus comprising:
program holding means for holding one or more programs and identifications thereof;
resource data holding means for holding one or more pieces of resource data which correspond to the one or more programs on a one-to-one basis and each define resources necessary for an execution of a corresponding program;
request receiving means for receiving either a resource data request or aprogram request from the receiving apparatus; and
transmitting means for either (a) reading from the resource data holding means a piece of resource data corresponding to an identification contained in the received resource data request and transmitting the read piece of resource data to the receiving apparatus, or (b) reading from the program holding means a program corresponding to an identification contained in the received program request, and transmitting the read program to the receiving apparatus, and
the receiving apparatus comprising:
first request transmitting means for transmitting to the transmitting apparatus the resource data request that contains the identification of a download-target program;
resource data receiving means for receiving the piece of resource data sent from the transmitting apparatus in response to the resource data request;
judging means for judging from the piece of resource data whether the receiving apparatus can execute the download-target program;
second request transmitting means for, when the judging means judges that the receiving apparatus can execute the download-target program, transmitting the program request containing the identification of the download-target program; and
program receiving means for receiving a program that is sent from the transmitting apparatus in response to the program request.

6. The download system of Claim 5, wherein
the one or more pieces of resource data held by the resource data holding means are resource acquisition scripts used for acquiring resources necessary for executions of corresponding programs, and
the judging means judges from a result of a provisional execution of a resource acquisition script received from the transmitting apparatus whether the receiving apparatus can execute the download-target program.

7. A download system including (a) a receiving apparatus for receiving and executing a program and (b) a transmitting apparatus for transmitting the program to the receiving apparatus,
the transmitting apparatus comprising:
program holding means for holding one or more programs and identifications thereof;
check script holding means for holding one or more check scripts which correspond to the one or more programs and are each used to check whether the receiving apparatus has either of a device function and an embedded-program function that is necessary for an execution of a corresponding program;
request receiving means for receiving either a check script request or a program request from the receiving apparatus; and
transmitting means for either (a) reading from the check script holding means a check script corresponding to an identification contained in the received check script request and transmitting the read check script to the receiving apparatus, or (b) reading from the programholding means a program corresponding to an identification contained in the received program request, and transmitting the read program to the receiving apparatus, and
the receiving apparatus comprising:
first request transmitting means for transmitting to the transmitting apparatus the check script request that contains the identification of a download-target program;
check script receiving means for receiving the check script sent from the transmitting apparatus in response to the check script request;
judging means for judging from a result of an execution of the received check script whether the receiving apparatus can execute the download-target program;
second request transmitting means for, when the judging means judges that the receiving apparatus can execute the download-target program, transmitting the program request containing the identification of the download-target program; and
program receiving means for receiving a program that is sent from the transmitting apparatus in response to the program request.

8. A receiving apparatus for receiving and executing a program in a download system which also includes a transmitting apparatus for transmitting the program to the receiving apparatus, the receiving apparatus comprising:
information generating means for generating receiving apparatus information that indicates a use state of resources held by the receiving apparatus that are necessary for program executions;
request transmitting means for transmitting to the transmitting apparatus a download request which contains (a) an identification of a download-target program and (b) the generated receiving apparatus information; and
program receiving means for receiving a program that is sent from the transmitting apparatus in response to the download request.

9. A receiving apparatus for receiving and executing a program in a download system which also includes a transmitting apparatus for transmitting the program to the receiving apparatus, the transmitting apparatus holding a plurality of programs and identifications thereof, the plurality of programs achieving basically the same function and requiring resources that satisfy different conditions, the receiving apparatus comprising:
information generating means for generating receiving apparatus information that indicates a use state of resources held by the receiving apparatus that are necessary for program executions;
request transmitting means for transmitting to the transmitting apparatus a download request which contains (a) an identification of a download-target program and (b) the generated receiving apparatus information;
selection receiving means for presenting to a user a plurality of pieces of characteristic information that are received from the transmitting apparatus and each indicate characteristics at an execution of a corresponding one of a plurality of programs having the identification contained in the download request, allowing the user to select one among the plurality of pieces of characteristic information, and receiving a selection result from the user;
selection result notifying means for notifying the transmitting apparatus of the selection result; and
program receiving means for receiving a program that corresponds to the selection result and is sent from the transmitting apparatus.

10. A receiving apparatus for receiving and executing a program in a download system which also includes a transmitting apparatus for transmitting the program to the receiving apparatus, the receiving apparatus comprising:
first request transmitting means for transmitting to the transmitting apparatus the resource data request that contains the identification of a download-target program;
resource data receiving means for receiving the piece of resource data sent from the transmitting apparatus in response to the resource data request;
judging means for judging from the piece of resource data whether the receiving apparatus can execute the download-target program;
second request transmitting means for, when the judging means judges that the receiving apparatus can execute the download-target program, transmitting the program request containing the identification of the download-target program; and
program receiving means for receiving a program that is sent from the transmitting apparatus in response to the program request.

11. The receiving apparatus of Claim 10, wherein
the piece of resource data received by the resource data receiving means is a resource acquisition script used for acquiring resources necessary for an execution of a corresponding program, and
the judging means judges from a result of a provisional execution of the resource acquisition script received from the transmitting apparatus whether the receiving apparatus can execute the download-target program.

12. A receiving apparatus for receiving and executing a program in a download system which also includes a transmitting apparatus for transmitting the program to the receiving apparatus, the receiving apparatus comprising:
first request transmitting means for transmitting to the transmitting apparatus a check script request that contains an identification of a download-target program;
check script receiving means for receiving a check script sent from the transmitting apparatus in response to the check script request;
judging means for judging from a result of an execution of the received check script whether the receiving apparatus can execute the download-target program;
second request transmitting means for, when the judging means judges that the receiving apparatus can execute the download-target program, transmitting the program request containing the identification of the download-target program; and
program receiving means for receiving a program that is sent from the transmitting apparatus in response to the program request.

13. A transmitting apparatus that transmits a program to a receiving apparatus that receives and executes the program, the transmitting apparatus and the receiving apparatus being included in a download system, the transmitting apparatus comprising:
program holding means for holding one or more programs and identifications thereof;
resource information holding means for holding one or more pieces of resource information which correspond to the one or more programs on a one-to-one basis and each indicate resources necessary for an execution of a corresponding program;
request receiving means for receiving a download request from the receiving apparatus;
judging means for judging, from (a) apiece of resource information corresponding to one of the one or more programs with an identification contained in the download request and (b) receiving apparatus information contained in the download request, whether the receiving apparatus can execute the program with the identification; and
program transmitting means for transmitting to the receiving apparatus the program with the identification when the judging means judges that the receiving apparatus can execute the program.

14. A transmitting apparatus that transmits a program to a receiving apparatus that receives and executes the program, the transmitting apparatus and the receiving apparatus being included in a download system, the transmitting apparatus comprising:
program holding means for holding a plurality of programs and identifications thereof, the plurality of programs achieving basically the same function and requiring resources that satisfy different conditions;
resource information holding means for holding a plurality of pieces of resource information which correspond to the plurality of programs on a one-to-one basis and each indicate resources necessary for an execution of a corresponding program;
request receiving means for receiving a download request from the receiving apparatus;
judging means for judging, from (a) two or more pieces of resource information corresponding to two or more programs that have an identification contained in the download request, among the plurality of programs and (b) receiving apparatus information contained in the download request, whether the receiving apparatus can execute the two or more programs, and when judging that the receiving apparatus can execute any of at least two programs among the two or more programs, selecting one out of the at least two programs; and
program transmitting means for transmitting the program selected by the judging means to the receiving apparatus.

15. A transmitting apparatus that transmits a program to a receiving apparatus that receives and executes the program, the transmitting apparatus and the receiving apparatus being included in a download system, the transmitting apparatus comprising:
program holding means for holding one or more programs and identifications thereof;
resource data holding means for holding one or more pieces of resource data which correspond to the one or more programs on a one-to-one basis and each define resources necessary for an execution of a corresponding program;
request receiving means for receiving either a resource data request or a program reguest from the receiving apparatus; and
transmitting means for either (a) reading from the resource data holding means a piece of resource data corresponding to an identification contained in the received resource data request and transmitting the read piece of resource data to the receiving apparatus, or (b) reading from the program holding means a program corresponding to an identification contained in the received program request, and transmitting the read program to the receiving apparatus.

16. The transmitting apparatus of Claim 15, wherein
the one or more pieces of resource data held by the resource data holding means are resource acquisition scripts used for acquiring resources necessary for executions of corresponding programs.

17. A transmitting apparatus that transmits a program to a receiving apparatus that receives and executes the program, the transmitting apparatus and the receiving apparatus being included in a download system, the transmitting apparatus comprising:
program holding means for holding one or more programs and identifications thereof;
check script holding means for holding one or more check scripts which correspond to the one or more programs and are each used to check whether the receiving apparatus has either of a device function and an embedded-program function that is necessary for an execution of a corresponding program;
request receiving means for receiving either a check script request or a program request from the receiving apparatus; and
transmitting means for either (a) reading from the check script holding means a check script corresponding to an identification contained in the received check script request and transmitting the read check script to the receiving apparatus, or (b) reading from the program holding means a program corresponding to an identification contained in the received program request, and transmitting the read program to the receiving apparatus.
